# EUROPÄISCHE PATENTSCHRIFT

(11) **EP 1 648 951 B1**
(45) Veröffentlichungstag und Bekanntmachung des Hinweises auf die Patenterteilung: **09.03.2011**
(21) Anmeldenummer: 04740900.8
(22) Anmeldetag: 10.07.2004
(51) Int. Cl.: C08G 18/40, C08G 18/72, C08G 18/80, C09D 175/04

(54) **THERMISCH HÄRTENDER, TRANSPARENTER BESCHICHTUNGSSTOFF, VERFAHREN ZU SEINER HERSTELLUNG UND SEINE VERWENDUNG**
THERMALLY HARDENING, TRANSPARENT COATING SUBSTANCE, METHOD FOR THE PRODUCTION THEREOF AND ITS USE
MATIERE DE REVETEMENT TRANSPARENTE THERMODURCISSABLE, PROCEDE PERMETTANT DE LA PRODUIRE ET UTILISATION CORRESPONDANTE

(30) Priorität: 02.08.2003 DE 10335491
(43) Veröffentlichungstag der Anmeldung: 26.04.2006
(73) Patentinhaber: BASF Coatings GmbH, 48165 Münster (DE)
(72) Erfinder: KLEIN, Günter, 48165 Münster (DE); RÖCKRATH, Ulrike, 48308 Senden (DE); NIEMANN, Jürgen, 48165 Münster (DE); POTH, Ulrich, 48163 Münster (DE); BROSSEIT, Andre, 59077 Hamm (DE); WERMELT, Karin, 48165 Münster (DE); SCHMELING, Alexandra, 59065 Hamm (DE)
(74) Vertreter: Leifert & Steffan
(86) Internationale Anmeldenummer: PCT/EP2004/007636
(87) Internationale Veröffentlichungsnummer: WO 2005/016985

(56) Entgegenhaltungen:
- WO-A-02/44237
- WO-A-92/02590
- US-A- 5 508 337
- US-A- 5 869 566

## Beschreibung

Die vorliegende Erfindung betrifft einen neuen, thermisch härtenden, transparenten Beschichtungsstoff. Außerdem betrifft die vorliegende Erfindung ein neues Verfahren zur Herstellung eines thermisch härtenden, transparenten Beschichtungsstoffs. Des Weiteren betrifft die vorliegende Erfindung die Verwendung des neuen, thermisch härtenden, transparenten Beschichtungsstoffs für die Herstellung von transparenten Beschichtungen nach dem Coil-Coating-Verfahren.

Moderne Personenkraftwagen, insbesondere Personenkraftwagen der Oberklasse, weisen farb- und/oder effektgebende Mehrschichtlackierungen auf. Bekanntermaßen umfassen diese eine Elektrotauchlackierung, eine Füllerlackierung, Steinschlagschutzgrundierung oder Funktionsschicht, eine farb- und/oder effektgebende Basislackierung und eine Klarlackierung. Die Mehrschichtlackierungen werden mit Hilfe so genannter Nass-in-nass-Verfahren hergestellt, bei denen man auf eine getrocknete, indes nicht gehärtete Basislackschicht eine Klarlackschicht appliziert, wonach man zumindest Basislackschicht und Klarlackschicht gemeinsam thermisch härtet. In dieses Verfahren kann auch die Herstellung der Elektrotauchlackierung und der Füllerlackierung, Steinschlagschutzgrundierung oder Funktionsschicht einbezogen werden.

Die farb- und/oder effektgebenden Mehrschichtlackierungen müssen die so genannte Automobilqualität aufweisen. Gemäß dem europäischen Patent EP 0 352 298 B1, Seite 15, Zeile 42, bis Seite 17, Zeile 14, bedeutet dies, dass die betreffenden Mehrschichtlackierungen
(1) einen hohen Glanz,
(2) eine hohe Abbildungsunterscheidbarkeit (DOI, distinctiveness of the reflected image),
(3) ein hohes und gleichmäßiges Deckvermögen,
(4) eine einheitliche Trockenschichtdicke,
(5) eine hohe Benzinbeständigkeit,
(6) eine hohe Lösemittelbeständigkeit,
(7) eine hohe Säurebeständigkeit,
(8) eine hohe Härte,
(9) eine hohe Abriebfestigkeit,
(10) eine hohe Kratzfestigkeit,
(11) eine hohe Schlagfestigkeit,
(12) eine hohe Zwischenschichthaftung und Haftung auf dem Substrat und
(13) eine hohe Witterungsstabilität und UV-Beständigkeit.

Weitere wesentliche technologische Eigenschaften sind
(14) eine hohe Beständigkeit gegenüber Schwitzwasser,
(15) keine Neigung zum Weißanlaufen und
(16) eine hohe Stabilität gegenüber Baumharz und Vogelkot.

Dabei prägen insbesondere die Klarlackierungen so wesentliche technologische Eigenschaften wie
(1) Glanz,
(2) Abbildungsunterscheidbarkeit (DOI, distinctiveness of the reflected image),
(5) Benzinbeständigkeit,
(6) Lösemittelbeständigkeit,
(7) Säurebeständigkeit,
(8) Härte,
(9) Abriebfestigkeit,
(10) Kratzfestigkeit,
(13) Witterungsstabilität und UV-Beständigkeit,
(14) Beständigkeit gegenüber Schwitzwasser,
(15) Beständigkeit gegenüber Weißanlaufen und
(16) Stabilität gegenüber Baumharz und Vogelkot.

An die Qualität der Klarlackierungen werden deshalb besonders hohe Anforderungen gestellt.

Aber auch an die technologischen Eigenschaften der Klarlacke, aus denen diese Klarlackierungen hergestellt werden, werden besondere Anforderungen gestellt. Zunächst einmal müssen sie die Klarlackierungen in der erforderlichen Qualität problemlos und hervorragend reproduzierbar liefern und sie müssen in einfacher und hervorragend reproduzierbarer Weise herstellbar sein.

Der Herstellung von Mehrschichtlackierungen nach dem vorstehend beschriebenen Verfahren wird in der Linie beim Automobilhersteller durchgeführt und erfordert einen hohen ökologischen, verfahrenstechnischen und apparativen Aufwand, der einen signifikanten Teil der Herstellungskosten verursacht.

Es sich daher ein Bestreben der Automobilindustrie, Teile der Karosserie, wie Motorhaube, Heckklappe oder Türen, durch bereits fertig in der Wagenfarbe lackierte Teile zu ersetzen.

Eine ganz wesentliche Voraussetzung für solches Verfahren ist aber, dass entsprechende beschichtete Coils mit Hilfe des Coil-Coating-Verfahrens hergestellt und im lackierten Zustand durch formgebende Verfahren, insbesondere durch Tiefziehen, vom Automobilhersteller oder vom Hersteller von Anbauteilen in die gewünschte Form gebracht werden können.

Unter Bandbeschichtung oder Coil Coating versteht man eine Spezialform der Walzlackierung (Römpp Lexikon Lacke und Druckfarben, Georg Thieme Verlag, Stuttgart, New York, 1998, Seite 617, "Walzlackierung") sowie vereinzelt der Spritz- und Gießlackierung von Metallbändern mit flüssigen Lacken. Es handelt sich um ein kontinuierlich arbeitendes Verfahren, d.h. alle Arbeitsabläufe wie Reinigung, Vorbehandlung, Lackierung und Härtung usw. werden in einem Arbeitsgang in einer Anlage durchgeführt. Die Bandbeschichtung umfaßt schematisch die folgenden Schritte: Nach Reinigung und Entfettung des Bandes erfolgt eine mehrstufige chemische Vorbehandlung mit anschließender Passivierung, Spülung und Trocknung. Nach dem Abkühlen erfolgt das einseitige oder zweiseitige Aufbringen des flüssigen Beschichtungsstoffs mit zwei oder drei Walzen, meist nach dem Reverse-Roller-Coating-Verfahren. Nach einer sehr kurzen Abdunstzeit erfolgt die thermische Härtung der applizierten Schicht bei Temperaturen von 180 bis 260°C während 20 bis 60 s. Bei der Herstellung einer Mehrschichtlackierung werden Applikation und Härtung wiederholt. Die Geschwindigkeiten von Bandbeschichtungsanlagen betragen bis zu 250 m/min (Römpp Lexikon Lacke und Druckfarben, Georg Thieme Verlag, Stuttgart, New York, 1998, Seite 55, "Bandbeschichtung")..

Die Übertragung dieses an sich vorteilhaften Verfahrens auf den Automobilsektor ist bisher im wesentlichen daran gescheitert, dass die bisher eingesetzten Klarlacke schon vor der Verformung nicht die erforderliche Automobilqualität aufweisen. Vor allem ist es nicht möglich, die von der Automobilindustrie geforderten Farbtöne und optischen Effekte sowie den geforderten Glanz und optischen Gesamteindruck (Appearance) nachzustellen, weil die beschichteten Coils mit bloßem Auge sichtbare Walzenstrukturen aufweisen.

Außerdem werden in Coil-Coating-Verfahren häufig Klarlacke auf der Basis von Polyestern als Bindemitteln und Melaminharzen als Vernetzungsmitteln eingesetzt. Diese Klarlacke sind wegen ihrer guten Benetzung und ihrem guten Verlauf gut verarbeitbar Die hieraus hergestellten Beschichtungen sind zwar sehr flexibel und können sehr gut verformt werden, erfüllen aber hinsichtlich der Chemikalienbeständigkeit und der Witterungsbeständigkeit nicht die erforderliche Automobilqualität.

Klarlacke auf der Basis von (Meth)Acrylat(co)polymerisaten als Bindemitteln und blockierten Polyisocyanaten als Vernetzungsmitteln liefern zwar üblicherweise Klarlackierungen von hoher Automobilqualität, insbesondere was den Glanz, die Härte und die Chemikalienbeständigkeit betrifft. Ein optimaler Verlauf der Klarlacke und eine optimale Witterungsbeständigkeit und Abbildungsunterscheidbarkeit können nur durch die Zugabe von Additiven erreicht werden. Die Klarlacke können im Coil-Coating-Verfahren wegen der geringeren Flexibilität der betreffenden Klarlackierungen nicht eingesetzt werden.

Um die Vorteile der Klarlacke auf der Basis von (Meth)Acrylat (Co)Polymerisaten und blockierten Polyisocyanaten sowie der hieraus hergestellten Klarlackierungen auch im Coil-Coating-Verfahren zu nutzen, wird in der deutschen Patentanmeldung DE 100 59 853 A1 ein Klarlack vorgeschlagen, der
(1) 10 bis 70 Gew.-% einer nicht wässrigen Lösung eines Polymers auf Acrylatbasis mit einer Hydroxylzahl zwischen 100 und 250,
(2) 10 bis 70 Gew.-% einer nicht wässrigen Lösung eines fluormodifizierten Polymers mit einer Glasübergangstemperatur zwischen 20 und 40 °C und
(3) 20 bis 60 Gew.-% mindestens eines blockierten aliphatischen oder cycloaliphatischen Polyisocyanats
enthält, wobei das Gewichtsverhältnis von Komponente (1) zu Komponente (2) höchstens 1 beträgt und die Summe der Komponenten (1), (2) und (3) 100%, bezogen auf den Bindemittelgehalt, beträgt.

Dieser bekannte Beschichtungsstoff liefert zwar transparente Beschichtungen, die hinsichtlich Glanz, Härte, Flexibilität und Chemikalienbeständigkeit Automobilqualität aufweisen. Wegen der vergleichsweise schlechten Benetzung und dem vergleichsweise schlechten Verlauf ist der bekannte Beschichtungsstoff nicht gut verarbeitbar. Die hieraus hergestellten Beschichtungen weisen den wesentlichen Nachteil auf, dass sie Fluorverbindungen in erheblichen Mengen enthalten. Es ist aber bekannt, dass Fluor beim Recycling von Altwagen erhebliche Probleme bereitet, insbesondere wenn die Karosserie aus Aluminium aufgebaut ist. Außerdem können die Beschichtungen nur schlecht überlackiert werden, was bei der Autoreparaturlackierung erhebliche Probleme bereitet. Nicht zuletzt sind die Fluorverbindungen vergleichsweise teuer, was den Beschichtungsstoff und die hieraus hergestellten Beschichtungen wirtschaftlich weniger attraktiv macht.

Aufgabe der vorliegenden Erfindung ist es, einen neuen, thermisch härtenden, transparenten Beschichtungsstoff bereitzustellen, der die Nachteile des Standes der Technik nicht mehr länger aufweist, sondern frei von organischen Fluorverbindungen ist, so dass die hieraus hergestellten beschichteten Substrate, insbesondere die Automobilkarosserien auf der Basis von Aluminium, ohne Probleme recyclingfähig sind. Außerdem soll der neue, thermisch härtende, transparente Beschichtungsstoff eine besonders gute Benetzung und einen besonders guten Verlauf haben und daher besonders gut verarbeitbar sein. Außerdem soll er mit Hilfe vergleichsweise preisgünstiger Bestandteile hergestellt werden können, sodass er nicht nur technologisch, sondern auch wirtschaftlich vorteilhaft ist.

Der neue, thermisch härtende, transparente Beschichtungsstoff soll in einfacher Weise hergestellt und im Coil-Coating-Verfahren mit Vorteil eingesetzt werden können und transparente, insbesondere klare, Beschichtungen auf Coils liefern, die die Automobilqualität, insbesondere hinsichtlich des Glanzes, der Oberflächenglätte, der Abbildungsunterscheidbarkeit, der Härte, der Witterungsbeständigkeit und der Chemikalienbeständigkeit, aufweisen.

Des Weiteren sollen die neuen, transparenten, insbesondere klaren, Beschichtungen eine sehr gute Überlackierbarkeit haben, sodass sie sehr gut reparaturiackiert werden können.

Die vorbeschichteten Coils sollen auch nach ihrer formgebenden Verarbeitung die Automobilqualität weiterhin behalten, sodass die beschichteten Formteile als Anbauteile in entsprechend beschichtete, größere Einheiten, insbesondere entsprechend beschichtete Automobilkarosserien, eingebaut werden können, ohne dass sich ein optischer Unterschied, insbesondere im Bereich aneinander stoßender Kanten, nachteilig bemerkbar macht.

Dem gemäß wurde der neue, thermisch härtende, transparente Beschichtungsstoff gefunden, enthaltend, jeweils bezogen auf (A), (B), (C) und (D),
(A) 10 bis 40 Gew.-% mindestens eines (Meth)Acrylat(co)polymerisats mit einem zahlenmittleren Molekulargewicht von 1.000 bis 6.000 Dalton, einer Glasübergangstemperatur von -15 bis +70 °C und einer Hydroxylzahl von 80 bis 200 mg KOH/g,
(B) 10 bis 40 Gew.-% mindestens eines Polyesters mit einem zahlenmittleren Molekulargewicht von 800 bis 6.000 Dalton, einer Hydroxylzahl von 80 bis 200 mg KOH/g und einer Säurezahl von 1 bis 50 mg KOH/g, enthaltend, bezogen auf den Polyester, 30 bis 70 Gew.-% cycloaliphatischer Struktureinheiten,
(C) 10 bis 40 Gew.-% mindestens eines blockierten Polyisocyanats, worin die blockierten Polyisocyanatgruppen an mindestens eine flexibilisierende Struktureinheit gebunden sind, die als Bestandteil eines dreidimensionalen Netzwerks dessen Glasübergangstemperatur erniedrigt, und
(D) 10 bis 40 Gew.% mindestens eines blockierten Polyisocyanats, worin mindestens eine der blockierten Polyisocyanatgruppen an mindestens eine hart machende Struktureinheit gebunden ist, die als Bestandteil eines dreidimensionalen Netzwerks dessen Glasübergangstemperatur erhöht.

Im Folgenden wird der neue, thermisch härtende, transparente Beschichtungsstoff als »erfindungsgemäßer Beschichtungsstoff« bezeichnet.

Außerdem wurde das neue Verfahren zur Herstellung des erfindungsgemäßen Beschichtungsstoffs durch Vermischen der Bestandteile (A), (B), (C) und (D) sowie gegebenenfalls mindestens eines Zusatzstoffes (E) und Homogenisieren der resultierenden Mischung gefunden.

Im Folgenden wird das neue Verfahren zur Herstellung des erfindungsgemäßen Beschichtungsstoffs als »erfindungsgemäßes Herstellverfahren« bezeichnet.

Des Weiteren wurde die neue Verwendung des erfindungsgemäßen Beschichtungsstoffs für die Herstellung von transparenten Beschichtungen nach dem Coil-Coating-Verfahren gefunden.

Im Folgenden wird die neue Verwendung des erfindungsgemäßen Beschichtungsstoffs als »erfindungsgemäße Verwendung« bezeichnet.

Im Hinblick auf Stand der Technik war es überraschend und für den Fachmann nicht vorhersehbar, dass die Aufgabe, die der vorliegenden Erfindung zugrunde lag, mit Hilfe des erfindungsgemäßen Beschichtungsstoffs, des erfindungsgemäßen Herstellverfahrens und der erfindungsgemäßen Verwendung gelöst werden konnte.

Insbesondere war es überraschend, dass der erfindungsgemäße Beschichtungsstoff die Nachteile des Standes der Technik nicht mehr länger aufwies, sondern frei von organischen Fluorverbindungen war, so dass die hieraus hergestellten beschichteten Substrate, insbesondere die Automobilkarosserien auf der Basis von Aluminium, ohne Probleme recyclingfähig waren.

Außerdem wies der neue, thermisch härtende, transparente Beschichtungsstoff eine besonders gute Benetzung und einen besonders guten Verlauf auf und war daher besonders gut verarbeitbar. Außerdem konnte er aus vergleichsweise preisgünstigen Bestandteilen hergestellt werden, sodass er nicht nur technologisch, sondern auch wirtschaftlich vorteilhaft war.

Der neue, thermisch härtende, transparente Beschichtungsstoff konnte in einfacher Weise hergestellt und im Coil-Coating-Verfahren mit Vorteil eingesetzt werden und lieferte transparente, insbesondere klare, Beschichtungen auf Coils, die die Automobilqualität, insbesondere hinsichtlich des Glanzes, der Oberflächenglätte, der Abbildungsunterscheidbarkeit, der Härte, der Witterungsbeständigkeit und der Chemikalienbeständigkeit, aufwiesen.

Des Weiteren wiesen die neuen, transparenten, insbesondere klaren, Beschichtungen eine sehr gute Überlackierbarkeit auf, sodass sie sehr gut reparaturlackiert werden konnten

Die vorbeschichteten Coils behielten auch nach ihrer formgebenden Verarbeitung weiterhin die Automobilqualität, sodass die beschichteten Formteile als Anbauteile in entsprechend beschichtete, größere Einheiten, insbesondere entsprechend beschichtete Automobilkarosserien, eingebaut werden konnten, ohne dass sich ein optischer Unterschied, insbesondere im Bereich aneinander stoßender Kanten, nachteilig bemerkbar machte.

Der erfindungsgemäße Beschichtungsstoff konnte mit Hilfe des erfindungsgemäßen Herstellverfahrens in einfacher, sehr gut reproduzierbarer Weise hergestellt werden.

Insgesamt ermöglichte der erfindungsgemäße Beschichtungsstoff überraschenderweise die Übertragung des Coil-Coating-Verfahrens auf den Automobilsektor.

Der erfindungsgemäße Beschichtungsstoff enthält als ersten wesentlichen Bestandteil, jeweils bezogen auf (A), (B), (C) und (D), 10 bis 40 Gew.-%, insbesondere 10 bis 35 Gew.-%, mindestens eines, insbesondere eines, (Meth)Acrylat(co)polymerisats (A), bevorzugt eines (Meth)Acrylatcopolymerisats (A) und insbesondere eines Methacrylatcopolymerisats (A).

(A) weist ein zahlenmittleres Molekulargewicht von 1.500 bis 5.000 Dalton, insbesondere 1.000 bis 6.000 Dalton, auf. Es hat eine Glasübergangstemperatur von -15 bis +70 °C, insbesondere -15 bis +60 °C. Seine Hydroxylzahl liegt bei 80 bis 200 mg KOH/g, insbesondere 100 bis 180 mg KOH/g. Es kann eine Säurezahl von 0 bis 30 mg KOH/g aufweisen.

(A) wird durch radikalische (Co)Polymerisation, insbesondere Copolymerisation, radikalisch polymerisierbarer, olefinisch ungesättigter Monomere hergestellt.

Beispiele geeigneter olefinisch ungesättigter Monomere (a) für die Herstellung der (Meth)Acrylatcopolymerisate (A) sind
(a1) Monomere, welche mindestens eine Hydroxylgruppe pro Molekül tragen und obligatorisch eingesetzt werden, wie
   - Hydroxyalkylester der Acrylsäure, Methacrylsäure oder einer anderen alpha,beta-olefinisch ungesättigten Carbonsäure, die sich von einem Alkylenglykol ableiten, das mit der Säure verestert ist, oder die durch Umsetzung der alpha,beta-olefinisch ungesättigten Carbonsäure mit einem Alkylenoxid wie Ethylenoxid oder Propylenoxid erhältlich sind, insbesondere Hydroxyalkylester der Acrylsäure, Methacrylsäure, Ethacrylsäure, Crotonsäure, Maleinsäure, Fumarsäure oder Itaconsäure, in denen die Hydroxyalkylgruppe bis zu 20 Kohlenstoffatome enthält, wie 2-Hydroxyethyl-, 2-Hydroxypropyl-, 3-Hydroxypropyl-, 3-Hydroxybutyl-, 4-Hydroxybutylacrylat, -methacrylat, - ethacrylat, -crotonat, -maleinat, -fumarat oder -itaconat; oder Hydroxycycloalkylester wie 1,4-Bis(hydroxymethyl)cyclohexan-, Octahydro-4,7-methano-1H-inden-dimethanol- oder Methylpropandiolmonoacrylat, - monomethacrylat, -monoethacrylat, -monocrotonat, - monomaleinat, -monofumarat oder -monoitaconat; Umsetzungsprodukte aus cyclischen Estern, wie z.B. epsilon-Caprolacton und diesen Hydroxyalkyl- oder - cydoalkylestern;
   - olefinisch ungesättigte Alkohole wie Allylalkohol;
   - Polyole wie Trimethylolpropanmono- oder diallylether oder Pentaerythritmono-, -di- oder triallylether;
   - Umsetzungsprodukte aus Acrylsäure und/oder Methacrylsäure mit dem Glycidylester einer in alpha-Stellung verzweigten Monocarbonsäure mit 5 bis 18 C-Atomen je Molekül, insbesondere einer Versatic®-Säure, oder anstelle des Umsetzungsproduktes eine äquivalenten Menge Acryl- und/oder Methacrylsäure, die dann während oder nach der Polymerisationsreaktion mit dem Glycidylester einer in
   - alpha-Stellung verzweigten Monocarbonsäure mit 5 bis 18 C-Atomen je Molekül, insbesondere einer Versatic®-Säure, umgesetzt wird; und/oder
   - Acryloxysilan-enthaltende Vinylmonomere, herstellbar durch Umsetzung hydroxyfunktioneller Silane mit Epichlorhydrin und anschließender Umsetzung des Reaktionsproduktes mit (Meth)acrylsäure und/oder Hydroxyalkyl- und/oder - cycloalkylestern der (Meth)Acrylsäure und/oder weiterer hydroxylgruppehaltiger Monomere (a1).
(a2) Monomere, welche entweder mindestens eine Säuregruppe oder mindestens eine Aminogruppe pro Molekül tragen, wie
   - Acrylsäure, beta-Carboxyethylacrylat, Methacrylsäure, Ethacrylsäure, Crotonsäure, Maleinsäure, Fumarsäure oder Itaconsäure;
   - olefinisch ungesättigte Sulfon- oder Phosphonsäuren oder deren Teilester;
   - Maleinsäuremono(meth)acryloyloxyethylester, Bernsteinsäuremono(meth)acryloyloxyethylester oder Phthalsäuremono(meth)acryloyloxyethylester; oder
   - Vinylbenzoesäure (alle Isomere), alpha-Methylvinylbenzoesäure (alle Isomere) oder Vinylbenzsolsulfonsäure (alle Isomere); und/oder
   - Aminoethylacrylat, Aminoethylmethacrylat, Allylamin oder N-Methyliminoethylacrylat.
(a3) Monomere, die im wesentlichen oder völlig frei von reaktiven funktionellen Gruppen sind, wie:
   Monomere (a31):
      Im wesentlichen säuregruppenfreie (Meth)acrylsäureester wie (Meth)Acrylsäurealkyl- oder -cycloalkylester mit bis zu 20 Kohlenstoffatomen im Alkylrest, insbesondere Methyl-, Ethyl-, n-Propyl-, n-Butyl-, sec.-Butyl-, tert.-Butyl-, Hexyl-, Ethylhexyl-, Stearyl- und Laurylacrylat oder -methacrylat; cycloaliphatische (Meth)acrylsäureester, insbesondere Cyclohexyl-, Isobomyl-, Dicyclopentadienyl-, Octahydro-4,7-methano-1H-inden-methanol-oder tert.-Butylcyclohexyl(meth)acrylat; (Meth)Acrylsäureoxaalkylester oder -oxacycloalkylester wie Ethoxytriglykol(meth)acrylat und Methoxyoligoglykol(meth)acrylat mit einem Molekulargewicht Mn von vorzugsweise 550 oder andere ethoxylierte und/oder propoxylierte hydroxylgruppenfreie (Meth)Acrylsäurederivate (weitere Beispiele geeigneter Monomere (31) dieser Art sind aus der Offenlegungsschrift DE 196 25 773 A1, Spalte 3, Zeile 65, bis Spalte 4, Zeile 20, bekannt). Diese können in untergeordneten Mengen höherfunktionelle (Meth)Acrylsäurealkyl-oder -cycloalkylester wie Ethylengylkol-, Propylenglykol-, Diethylenglykol-, Dipropylenglykol-, Butylenglykol-, Pentan-1,5-diol-, Hexan-1,6-diol-, Octahydro-4,7-methano-1 H-inden-dimethanol-oder Cyclohexan-1,2-, -1,3- oder -1,4-diol-di(meth)acrylat; Trimethylolpropan-di- oder -tri(meth)acrylat; oder Pentaerythrit-di-, - tri- oder -tetra(meth)acrylat enthalten. Rahmen der vorliegenden Erfindung sind hierbei unter untergeordneten Mengen an höherfunktionellen Monomeren (a31) solche Mengen zu verstehen, welche nicht zur Vernetzung oder Gelierung der Copolymerisate führen, es sei denn, sie sollen in der Form von vernetzten Mikrogelteilchen vorliegen.
   Monomere (a32):
      Vinylester von in alpha-Stellung verzweigten Monocarbonsäuren mit 5 bis 18 C-Atomen im Molekül. Die verzweigten Monocarbonsäuren können erhalten werden durch Umsetzung von Ameisensäure oder Kohlenmonoxid und Wasser mit Olefinen in Anwesenheit eines flüssigen, stark sauren Katalysators; die Olefine können Crack-Produkte von paraffinischen Kohlenwasserstoffen, wie Mineralölfraktionen, sein und können sowohl verzweigte wie geradkettige acyclische und/oder cycloaliphatische Olefine enthalten. Bei der Umsetzung solcher Olefine mit Ameisensäure bzw. mit Kohlenmonoxid und Wasser entsteht ein Gemisch aus Carbonsäuren, bei denen die Carboxylgruppen vorwiegend an einem quaternären Kohlenstoffatom sitzen. Andere olefinische Ausgangsstoffe sind z.B. Propylentrimer, Propylentetramer und Diisobutylen. Die Vinylester können aber auch auf an sich bekannte Weise aus den Säuren hergestellt werden, z.B. indem man die Säure mit Acetylen reagieren läßt. Besonders bevorzugt werden - wegen der guten Verfügbarkeit - Vinylester von gesättigten aliphatischen Monocarbonsäuren mit 9 bis 11 C-Atomen, die am alpha-C-Atom verzweigt sind, eingesetzt. Vinylester dieser Art werden unter der Marke VeoVa® vertrieben (vgl. auch Römpp Lexikon Lacke und Druckfarben, Georg Thieme Verlag, Stuttgart, New York, 1998, Seite 598).
   Monomere (a33):
      Diarylethylene, insbesondere solche der allgemeinen Formel 1:

      **R¹R²C=CR³R⁴** (I),

      worin die Reste R¹, R², R³ und R⁴ jeweils unabhängig voneinander für Wasserstoffatome oder substituierte oder unsubstituierte Alkyl-, Cycloalkyl-, Alkylcycloalkyl-, Cycloalkylalkyl-, Aryl-, Alkylaryl-, Cycloalkylaryl- Arylalkyl- oder Arylcycloalkylreste stehen, mit der Maßgabe, dass mindestens zwei der Variablen R¹, R², R³ und R⁴ für substituierte oder unsubstituierte Aryl-, Arylalkyl- oder Arylcycloalkylreste, insbesondere substituierte oder unsubstituierte Arylreste, stehen. Beispiele geeigneter Alkylreste sind Methyl, Ethyl, Propyl, Isopropyl, n-Butyl, iso-Butyl, tert.-Butyl, Amyl, Hexyl oder 2-Ethylhexyl. Beispiele geeigneter Cycloalkylreste sind Cyclobutyl, Cyclopentyl oder Cyclohexyl. Beispiele geeigneter Alkylcycloalkylreste sind Methylencyclohexan, Ethylencyclohexan oder Propan-1,3-diyl-cyclohexan. Beispiele geeigneter Cycloalkylalkylreste sind 2-, 3- oder 4-Methyl-, -Ethyl-, -Propyl- oder -Butylcyclohex-1-yl. Beispiele geeigneter Arylreste sind Phenyl, Naphthyl oder Biphenylyl, vorzugsweise Phenyl und Naphthyl und insbesondere Phenyl. Beispiele geeigneter Alkylarylreste sind Benzyl oder Ethylen- oder Propan-1,3-diyl-benzol. Beispiele geeigneter Cycloalkylarylreste sind 2-, 3- oder 4-Phenylcyclohex-1-yl. Beispiele geeigneter Arylalkylreste sind 2-, 3- oder 4-Methyl-, - Ethyl-, -Propyl- oder -Butylphen-1-yl. Beispiele geeigneter Arylcycloalkylreste sind 2-, 3- oder 4-Cyclohexylphen-1-yl. Vorzugsweise handelt es sich bei den Arylresten R¹, R², R³ und/oder R⁴ um Phenyl- oder Naphthylreste, insbesondere Phenylreste. Die in den Resten R¹, R², R³ und/oder R⁴ gegebenenfalls vorhandenen Substituenten sind elektronenziehende oder elektronenschiebende Atome oder organische Reste, insbesondere Halogenatome, Nitril-, Nitro-, partiell oder vollständig halogenierte Alkyl-, Cycloalkyl-, Alkylcycloalkyl-, Cycloalkylalkyl-, Aryl-, Alkylaryl-, Cycloalkylaryl-Arylalkyl- und Arylcycloalkylreste; Aryloxy-, Alkyloxy- und Cycloalkyloxyreste; und/oder Arylthio-, Alkylthio- und Cycloalkylthioreste. Besonders vorteilhaft sind Diphenylethylen, Dinaphthalinethylen, cis- oder trans- Stilben oder Vinyliden-bis(4-nitrobenzol), insbesondere Diphenylethylen (DPE), weswegen sie bevorzugt verwendet werden. Im Rahmen der vorliegenden Erfindung werden die Monomeren (b33) eingesetzt, um die Copolymerisation in vorteilhafter Weise derart zu regeln, dass auch eine radikalische Copolymerisation in Batch-Fahrweise möglich ist.
   Monomere (a34):
      Vinylaromatische Kohlenwasserstoffe wie Styrol, Vinyltoluol oder alpha-Alkylstyrole, insbesondere alpha-Methylstyrol.
   Monomere (a35):
      Nitrile wie Acrylnitril und/oder Methacrylnitril.
   Monomere (a36):
      Vinylverbindungen, insbesondere Vinyl- und/oder Vinylidendihalogenide wie Vinylchlorid, Vinylfluorid, Vinylidendichlorid oder Vinylidendifluorid; N-Vinylamide wie Vinyl-N-methylformamid, N-Vinylcaprolactam oder N-Vinylpyrrolidon; 1-Vinylimidazol; Vinylether wie Ethylvinylether, n-Propylvinylether, lsopropylvinylether, n-Butylvinylether, Isobutylvinylether und/oder Vinylcyclohexylether; und/oder Vinylester wie Vinylacetat, Vinylpropionat, Vinylbutyrat, Vinylpivalat und/oder der Vinylester der 2-Methyt-2-ethylheptansäure.
   Monomere (a37):
      Allylverbindungen, insbesondere Allylether und -ester wie Allylmethyl-, -ethyl-, -propyl- oder -butylether oder Allylacetat, - propionat oder -butyrat.
   Monomere (a38):
      Polysiloxanmakromonomere, die ein zahlenmittleres Molekulargewicht Mn von 1.000 bis 40.000 und im Mittelt 0,5 bis 2,5 ethylenisch ungesättigte Doppelbindungen pro Molekül aufweisen; insbesondere Polysiloxanmakromonomere, die ein zahlenmittleres Molekulargewicht Mn von 2.000 bis 20.000, besonders bevorzugt 2.500 bis 10.000 und insbesondere 3.000 bis 7.000 und im Mittel 0,5 bis 2,5, bevorzugt 0,5 bis 1,5, ethylenisch ungesättigte Doppelbindungen pro Molekül aufweisen, wie sie in der DE 38 07 571 A1auf den Seiten 5 bis 7, der DE 37 06 095 A1 in den Spalten 3 bis 7, der EP 0 358 153B1auf den Seiten 3 bis 6, in der US 4,754,014 A1 in den Spalten 5 bis 9, in der DE 44 21 823 A1 oder in der internationalen Patentanmeldung WO 92/22615 auf Seite 12, Zeile 18, bis Seite 18, Zeile 10, beschrieben sind.
   Monomere (a39):
      Olefine wie Ethylen, Propylen, But-1-en, Pent-1-en, Hex-1-en, Cyclohexen, Cyclopenten Norbonen, Butadien, Isopren, Cylopentadien und/oder Dicyclopentadien.
   und/oder
(a4) Epoxidgruppen enthaltende Monomere wie der Glycidylester der Acrylsäure, Methacrylsäure, Ethacrylsäure, Crotonsäure, Maleinsäure, Fumarsäure oder Itaconsäure oder Allylglycidylether.

Die durch die Copolymerisation carboxylgruppenhaltiger Monomere (a3) gegebenenfalls vorhandenen Carboxylgruppen können als Zentren für polymeranaloge Umsetzungen mit epoxidgruppenhaltigen, aromatischen, aliphatischen und/oder cycloaliphatischen, insbesondere cycloaliphatischen, Verbindungen dienen. Dabei entstehen sekundäre Hydroxylgruppen, und die Glasübergangstemperatur von (A) kann mit Hilfe der eingeführten aromatischen, aliphatischen und/oder cycloaliphatischen, insbesondere cycloaliphatischen, Gruppen variiert werden.

Die durch die Copolymerisation epoxidgruppenhaltiger Monomere (a3) gegebenenfalls vorhandenen Epoxidgruppen können als Zentren für polymeranaloge Umsetzungen mit carboxylgruppenhaltigen, aromatischen, aliphatischen und/oder cycloaliphatischen, insbesondere cycloaliphatischen, Verbindungen dienen. Auch dabei entstehen sekundäre Hydroxylgruppen, und die Glasübergangstemperatur von (A) kann mit Hilfe der eingeführten aromatischen, aliphatischen und/oder cycloaliphatischen, insbesondere cycloaliphatischen, Gruppen variiert werden.

Höherfunktionelle Monomere (a) der vorstehend beschriebenen Art werden im allgemeinen in untergeordneten Mengen eingesetzt. Hierunter sind solche Mengen zu verstehen, welche nicht zur Vernetzung oder Gelierung der (Meth)Acrylatcopolymerisate (A) führen, es sei denn, man will gezielt vernetzte polymere Mikroteilchen herstellen.

Zur Herstellung von (A) werden die Monomeren (a) so ausgewählt, dass (A) die vorstehend beschriebenen Parameter aufweist.

Beispiele geeigneter Herstellverfahren für (A) werden in den europäischen Patentanmeldungen EP 0 767 185 A1, den deutschen Patenten DE 22 14 650 B1 oder DE 27 49 576 B1 und den amerikanischen Patentschriften US 4,091,048 A1, US 3,781,379 A1, US 5,480,493 A1, US 5,475,073 A1 oder US 5,534,598 A1 oder in dem Standardwerk Houben-Weyl, Methoden der organischen Chemie, 4. Auflage, Band 14/1, Seiten 24 bis 255, 1961, beschrieben. Als Reaktoren für die Copolymerisation kommen die üblichen und bekannten Rührkessel, Rührkesselkaskaden, Rohrreaktoren, Schlaufenreaktoren oder Taylorreaktoren, wie sie beispielsweise in der Patentschriften und den Patentanmeldungen DE 1 071 241 B1, EP 0 498 583 A1 oder DE 198 28 742 A1 oder in dem Artikel von K. Kataoka in Chemical Engineering Science, Band 50, Heft 9, 1995, Seiten 1409 bis 1416, beschrieben werden, in Betracht.

Der erfindungsgemäße Beschichtungsstoff enthält als zweiten wesentlichen Bestandteile, jeweils bezogen auf (A), (B), (C) und (D), 10 bis 40 Gew.-%, insbesondere 10 bis 35 Gew.-%, mindestens eines, insbesondere eines Polyesters (B).

(B) hat ein zahlenmittleres Molekulargewicht von 800 bis 6.000 Dalton, insbesondere 1.000 bis 5.500 Dalton. Seine Hydroxylzahl liegt bei 80 bis 200 mg KOH/g, insbesondere 100 bis 180 mg KOH/g. Die Säurezahl beträgt 1 bis 50 mg KOH/g, insbesondere 3 bis 25 mg KOH/g.

Für (B) ist es wesentlich, dass er, bezogen auf (B), 30 bis 40 Gew.-%, insbesondere 40 bis 60 Gew.%, cycloaliphatischer Struktureinheiten enthält.

Geeignete cycloaliphatische Struktureinheiten sind zweibindige oder dreibindige, insbesondere zweibindige, cycloaliphatische Reste, inklusive olefinisch ungesättigte cycloaliphatische Reste, oder aliphatische Reste, die mindestens einen cycloaliphatischen Rest, inklusive einen olefinisch ungesättigten, cycloaliphatischen Rest, enthalten.

Beispiele geeigneter zweibindiger, cycloaliphatischer Reste sind substituierte oder unsubstituierte, vorzugsweise unsubstituierte, Cycloalkandiyl-Reste mit 4 bis 20 Kohlenstoffatomen, wie Cyclobutan-1,3-diyl, Cyclopentan-1,3-diyl, Cyclohexan-1,2- -1,3- oder -1,4-diyl, Cyclohexen-1,2- -1,3- oder -1,4-diyl, Cycloheptan-1,4-diyl, Norboman-1,4-diyl, Adamantan-1,5-diyl, Decalin-diyl, 3,3,5-Trimethyl-cyclohexan-1,5-diyl, 1-Methylcyclohexan-2,6-diyl, Dicyclohexylmethan-4.,4'-diyl, 1,1'-Dicyclohexan-4,4'-diyl oder 1,4-Dicyclohexylhexan-4.,4"-diyl, insbesondere 3,3,5-Trimethyl-cyclohexan-1,5-diyl oder Dicydohexylmethan-4,4'-diyl. Daneben können in untergeordneten Mengen die entsprechenden Triyl-Reste angewandt werden.

Beispiele geeigneter, zweibindiger, aliphatischer Reste, die mindestens einen cycloaliphatischen Rest enthalten, sind Heptyl-1-pentyl-cyclohexan-3,4-bis(non-9-yl), Cyclohexan-1,2-, 1,4- oder -1,3-bis(methyl) Cyclohexan-1,2-, 1,4- oder -1,3-bis(eth-2-yl), Cyclohexan-1,3-bis(prop-3-yl) oder Cyclohexan-1,2-, 1,4- oder 1,3-bis(but-4-yl) sowie die entsprechenden Cyclohexenderivate.

Die vorstehend beschriebenen cycloaliphatischen Struktureinheiten können den bei der Herstellung von (B) eingesetzten Polyolen, insbesondere Diolen, und/oder den Polycarbonsäuren, Polycarbonsäureanhydriden, Polycarbonsäureestern oder Polycarbonsäurehalogeniden, insbesondere Dicarbonsäuren, Dicarbonsäureestern und Dicarbonsäureanhydriden, entstammen.

Beispiele für geeignete cycloaliphatische und cyclische, olefinisch ungesättigte Dicarbonsäuren sind 1,2-Cyclobutandicarbonsäure, 1,3-Cyclobutandicarbonsäure, 1,2-Cyclopentandicarbonsäure, 1,3-Cyclopentandicarbonsäure, Hexahydrophthalsäure, 1,3-Cyclohexandicarbonsäure, 1,4-Cyclohexandicarbonsäure, 4-Methylhexahydrophthalsäure, Tricyclodecandicarbonsäure, Tetrahydrophthalsäure, 4-Methyltetrahydrophthalsäure oder polymere Fettsäuren, insbesondere solche mit einem Dimerengehalt von mehr als 90 Gew.%, die auch als Dimerfettsäuren bezeichnet werden. Diese Dicarbonsäuren können sowohl in ihrer cis- als auch in ihrer trans-Form sowie als Gemisch beider Formen eingesetzt werden. Geeignet sind auch die von ihnen abgeleiteten Ester und Anhydride (sofern existent).

Beispiele geeigneter cycloaliphatischer Diole sind 1,2-, 1,3- oder 1,4-Cyclohexandiol, 1,2-, 1,3- oder 1,4-Cyclohexandimethanol oder 1-Dihydroxymethyl-bicyclo[2.2.1]heptan.

Ansonsten können die bei der Herstellung von Polyestern üblicherweise eingesetzten acyclischen aliphatischen und aromatischen Polycarbonsäuren, Polycarbonsäureanhydride, Polycarbonsäureester oder Polycarbonsäurehalogenide, insbesondere Dicarbonsäuren, Dicarbonsäureester und Dicarbonsäureanhydride, eingesetzt werden.

Beispiele für geeignete aromatische Dicarbonsäuren sind Phthalsäure, Isophthalsäure, Terephthalsäure, Phthalsäure-, Isophthalsäure- oder Terephthalsäuremonosulfonat, oder Halogenphthalsäuren, wie Tetrachlor- bzw. Tetrabromphthalsäure, von denen Terephthalsäure vorteilhaft ist und deshalb bevorzugt verwendet wird.

Beispiele für geeignete acyclische aliphatische oder ungesättigte Dicarbonsäuren sind Oxalsäure, Malonsäure, Bernsteinsäure, Glutarsäure, Adipinsäure, Pimelinsäure, Korksäure, Azelainsäure, Sebacinsäure, Undecandicarbonsäure oder Dodecaridicarbonsäure oder Maleinsäure, Fumarsäure oder Itaconsäure.

Ansonsten können die bei der Herstellung von Polyestern üblicherweise eingesetzten acyclischen aliphatischen und aromatischen Polyole, insbesondere Diole, eingesetzt werden.

Beispiele geeigneter Diole sind Ethylenglykol, 1,2- oder 1,3-Propandiol, 1,2-, 1,3- oder 1,4-Butandiol, Diethylenglykol, Dipropylenglykol, 1,2-, 1,3-, 1,4- oder 1,5-pentandiol, 1,2-, 1,3-, 1,4-, 1,5- oder 1,6-Hexandiol, Hydroxypivalinsäureneopentylester, Neopentylglykol, 1,2-, 1,3- oder 1,4-Cyclohexandiol, 1,2-, 1,3- oder 1,4-Cyclohexandimethanol, Trimethylpentandiol, Ethylbutylpropandiol, die stellungsisomeren Diethyloctandiole, 2-Butyl-2-ethylpropandiol-1,3, 2-Butyl-2-methylpropandiol-1,3, 2-Phenyl-2-methylpropan-diol-1,3, 2-Propyl-2-ethylpropandiol-1,3, 2-Di-tert.-butylpropandiol-1,3, 2-Butyl-2-propylpropandiol-1,3, 2,2-Diethylpro-pandiol-1,3, 2,2-Dipropylpropandiol-1,3, 2-Cyclohexyl-2-methylpropandiol-1,3, 2,5-Dimethyl-hexandiol-2,5, 2,5-Diethylhexandiol-2,5, 2-Ethyl-5-methylhexandiol-2,5, 2,4-Dimethylpentandiol-2,4, 2,3-Dimethylbutandiol-2,3, 1,4-(2'-Hydroxypropyl)-benzol,1,3-(2'-Hydroxypropyl)-benzol oder die nachstehend beschriebenen, mit Hydroxylgruppen funktionalisierten Alkane.

Die funktionalisierten Alkane leiten sich ab von verzweigten, cyclischen oder acyclischen Alkanen mit 9 bis 16 Kohlenstoffatomen, welche jeweils das Grundgerüst bilden.

Beispiele geeigneter Alkane dieser Art mit 9 Kohlenstoffatomen sind 2-Methyloctan, 4-Methyloctan, 2,3-Dimethyl-heptan, 3,4-Dimethyl-heptan, 2,6-Dimethyl-heptan, 3,5-Dimethyl-heptan, 2-Methyl-4-ethyl-hexan oder lsopropyl-cyclohexan.

Beispiele geeigneter Alkane dieser Art mit 10 Kohlenstoffatomen sind 4-Ethyloctan, 2,3,4,5-Tetramethyl-hexan, 2,3-Diethyl-hexan oder 1-Methyl-2-n-propyl-cyclohexan.

Beispiele geeigneter Alkane dieser Art mit 11 Kohlenstoffatomen sind 2,4,5,6-Tetramethyl-heptan oder 3-Methyl-6-ethyl-octan.

Beispiele geeigneter Alkane dieser Art mit 12 Kohlenstoffatomen sind 4-Methyl-7-ethyl-nonan, 4,5-Diethyl-octan, 1'-Ethy1-butyl-cyclohexan, 3,5-Diethyl-octan oder 2,4-Diethyl-octan.

Beispiele geeigneter Alkane dieser Art mit 13 Kohlenstoffatomen sind 3,4-Dimethyl-5-ethyl-nonan oder 4,6-Dimethyl-5-ethyl-nonan.

Ein Beispiel eines geeigneten Alkans dieser Art mit 14 Kohlenstoffatomen ist 3,4-Dimethyl-7-ethyl-decan.

Beispiele geeigneter Alkane dieser Art mit 15 Kohlenstoffatomen sind 3,6-Diethyl-undecan oder 3,6-Dimethyl-9-ethyl-undecan.

Beispiele geeigneter Alkane dieser Art mit 16 Kohlenstoffatomen sind 3,7-Diethyl-dodecan oder 4-Ethyl-6-isopropyl-undecan.

Von diesen Grundgerüsten sind die Alkane mit 10 bis 14 und insbesondere 12 Kohlenstoffatomen besonders vorteilhaft und werden deshalb bevorzugt verwendet. Von diesen sind wiederum die Octanderivate ganz besonders vorteilhaft.

Die funktionalisierten Alkane weisen im allemeinen primäre und/oder sekundäre Hydroxylgruppen auf; vorzugsweise sind primäre und sekundäre Gruppen vorhanden.

Besonders vorteilhaft sind die stellungsisomeren Dialkyloctandiole, insbesondere die stellungsisomeren Diethyloctandiole.

Die bevorzugten stellungsisomeren Diethyloctandiole enthalten eine lineare C₈-Kohlenstoffkette.

Bezüglich der beiden Ethylgruppen weist die C₈-Kohlenstoffkette das folgende Substitutionsmuster auf: 2,3, 2,4, 2,5, 2,6, 2,7, 3,4, 3,5, 3,6 oder 4,5. Erfindungsgemäß ist es von Vorteil, wenn die beiden Ethylgruppen in 2,4-Stellung stehen, d. h., dass es sich um 2,4-Diethyloctandiole handelt.

Bezüglich der beiden Hydroxylgruppen weist die C₈-Kohlenstoffkette das folgende Substitutionsmuster auf: 1,2, 1,3, 1,4, 1,5, 1,6, 1,7, 1,8, 2,3, 2,4, 2,5, 2,6, 2,7, 2,8, 3,4, 3,5, 3,6, 3,7, 3,8, 4,5, 4,6, 4,8, 5,6, 5,7, 5,8, 6,7, 6,8 oder 7,8. Erfindungsgemäß ist es von Vorteil, wenn die beiden Hydroxylgruppen in 1,5-Stellung stehen, d. h., dass es sich um Diethyloctan-1,5-diole handelt.

Die beiden Substitutionsmuster werden in beliebiger Weise miteinander kombiniert, d. h., dass es sich bei den besonders vorteilhaften Diethyloctandiolen um
2,3-Diethyloctan-1,2-, -1,3-, -1,4-, -1,5-, -1,6-, -1,7-, -1,8-, -2,3-, -2,4-, -2,5 -, -2,6-, -2,7-, -2,8-, -3,4-, -3,5-, -3,6-, -3,7-, -3,8 -, -4,5-, -4,6-, -4,7-, -4,8-, - 5,6 -, -5,7-, -5,8-, -6,7-, -6,8- oder-7,8-diol,
2,4-Diethyloctan-1,2-, -1,3-, -1,4-, -1,5-, -1,6-, -1,7-, -1,8-, -2,3-, -2,4-, -2,5 -, -2,6-, -2,7-, -2,8-, -3,4-, -3,5-, -3,6-, -3,7-, -3,8 -, -4,5-, -4,6-, -4,7-, -4,8-, - 5,6 -, -5,7-, -5,8-, -6,7-, -6,8- oder -7,8-diol,
2,5-Diethyloctan-1,2-, -1,3-, -1,4-, -1,5-, -1,6-, -1,7-, -1,8-, -2,3-, -2,4-, -2,5 -, -2,6-, -2,7-, -2,8-, -3,4-, -3,5-, -3,6-, -3,7-, -3,8 -, -4,5-, -4,6-, -4,7-, -4,8-, - 5,6 -, -5,7-, -5,8-, -6,7-, -6,8- oder-7,8-diol,
2,6- Diethyloctan-1,2-, -1,3-, -1,4-, -1,5-, -1,6-, -1,7-, -1,8-, -2,3-, -2,4-, -2,5 -, -2,6-, -2,7-, -2,8-, -3,4-, -3,5-, -3,6-, -3,7-, -3,8 -, -4,5-, -4,6-, -4,7-, -4,8-, - 5,6 -, -5,7-, -5,8-, -6,7-, -6,8- oder-7,8-diol,
2,7- Diethyloctan-1,2-, -1,3-, -1,4-, -1,5-, -1,6-, -1,7-; -1,8-, -2,3-, -2,4-, -2,5 -, -2,6-, -2,7-, -2,8-, -3,4-, -3,5-, -3,6-, -3,7-, -3,8 -, -4,5-, -4,6-, -4,7-, -4,8-,-5,6 -, -5,7-, -5,8-, -6,7-, -6,8- oder -7,8-diol,
3,4-Diethyloctan-1,2-, -1,3-, -1,4-, -1,5-, -1,6-, -1,7-, -1,8-, -2,3-, -2,4-, -2,5 -, -2,6-, -2,7-, -2,8-, -3,4-, -3,5-, -3,6-, -3,7-, -3,8 -, -4,5-, -4,6-, -4,7-, -4,8-, - 5,6 -, -5,7-, -5,8-, -6,7-, -6,8- oder -7,8-diol,
3,5-Diethyloctan-1,2-, -1,3-, -1,4-, -1,5-, -1,6-, -1,7-, -1,8-, -2,3-, -2,4-, -2,5 -, -2,6-, -2,7-, -2,8-, -3,4-, -3,5-, -3,6-, -3,7-, -3,8 -, -4,5-, -4,6-, -4,7-, -4,8-, - 5,6 -, -5,7-, -5,8-, -6,7-, -6,8- oder -7,8-diol,
3,6-Diethyloctan-1,2-, -1,3-, -1,4-, -1,5-, -1,6-, -1,7-, -1,8-, -2,3-, -2,4-, -2,5 -, -2,6-, -2,7-, -2,8-, -3,4-, -3,5-, -3,6-, -3,7-, -3,8 -, -4,5-, -4,6-, -4,7-, -4,8-,-5,6 -, -5,7-, -5,8-, -6,7-, -6,8- oder -7,8-diol oder um
4,5-Diethyloctan-1,2-, -1,3-, -1,4-, -1,5-, -1,6-, -1,7-, -1,8-, -2,3-, -2,4-, -2,5 -, -2,6-, -2,7-, -2,8-, -3,4-, -3,5-, -3,6-, -3,7-, -3,8 -, -4,5-, -4,6-, -4,7-, -4,8-, - 5,6 -, -5,7-, -5,8-; -6,7-, -6,8- oder -7,8-diol handelt.

Die stellungsisomeren Diethyloctandiole können als einzelne Verbindungen oder als Gemische von zwei oder mehr Diethyloctandiolen verwendet werden.

Ganz besondere Vorteile resultieren aus der Verwendung von 2,4-Diethyloctan-1,5-diol.

Die bevorzugt verwendeten stellungsisomeren Diethyloctandiole sind an sich bekannte Verbindungen und können mit Hilfe. üblicher und bekannter Synthesemethoden der Organischen Chemie wie die basenkatalysierte Aldolkondensation hergestellt werden oder sie fallen als Nebenprodukte chemischer Großsynthesen wie der Herstellung von 2-Ethyl-hexanol an.

Die Herstellung von (B) erfolgt nach den bekannten Methoden der Veresterung, wie sie beispielsweise in der deutschen Patentanmeldung DE 40 24 204 A1, Seite 4, Zeilen 50 bis 65, beschrieben werden. Die Umsetzung erfolgt dabei üblicherweise bei Temperaturen zwischen 180 und 280 °C, gegebenenfalls in Gegenwart eines geeigneten Veresterungskatalysators, wie z.B. Lithiumoctoat, Dibutylzinnoxid, Dibutylzinndilaurat oder para-Toluolsulfonsäure. Es können auch die aus der deutschen Patentanmeldung DE 199 07 861 A1 bekannten heterogenen Veresterungksatalysatoren eingesetzt werden.

Die Herstellung von (B) kann in Gegenwart geringer Mengen eines geeigneten Lösemittels als Schleppmittel durchgeführt werden. Als Schleppmittel werden z. B. aromatische Kohlenwasserstoffe, wie insbesondere Xylol und (cyclo)aliphatische Kohlenwasserstoffe, z. B. Cyclohexan oder Methylcyclohexan, eingesetzt.

Der erfindungsgemäße Beschichtungsstoff enthält als dritten wesentlichen Bestandteil, jeweils bezogen auf (A), (B), (C) und (D), 10 bis 40 Gew.-%, insbesondere 10 bis 35 Gew.-%, mindestens eines, insbesondere eines, blockierten Polyisocyanats (C), worin die blockierten Polyisocyanatgruppen an mindestens eine flexibilisierende, vorzugsweise mindestens zwei und insbesondere mindestens drei flexibilisierende Struktureinheit(en) gebunden sind. Flexibilisierende Struktureinheiten erniedrigen als Bestandteil eines dreidimensionalen Netzwerks dessen Glasübergangstemperatur.

Die flexibilisierden Struktureinheiten sind vorzugsweise zweibindige organische Reste. Bevorzugt werden die flexibilisierenden Struktureinheiten aus der Gruppe, bestehend aus zweibindigen aliphatischen Kohlenwasserstoffresten und zweibindigen, Heteroatome enthaltenden, aliphatischen Kohlenwasserstoffresten, ausgewählt.

Beispiele geeigneter flexibilisierender, zweibindiger organischer Reste dieser Art sind substituierte oder unsubstituierte, bevorzugt unsubstituierte, lineare oder verzweigte, vorzugsweise lineare, Alkandiyl-Reste mit 4 bis 30, bevorzugt 5 bis 20 und insbesondere 6 Kohlenstoffatomen, die innerhalb der Kohlenstoffkette auch cyclische Gruppen enthalten können, sofern die Kohlenstoffketten zwischen den Isocyanatgruppen und den cyclischen Gruppen jeweils mehr als zwei Kohlenstoffatome enthalten.

Beispiele gut geeigneter linearer Alkandiyl-Reste sind sind Tetramethylen, Pentamethylen, Hexamethylen, Heptamethylen, Octamethylen, Nonan-1,9-diyl, Decan-1,10-diyl, Undecan-1,11-diyl Dodecan-1,12-diyl, Tridecan-1,13-diyl, Tetradecan-1,14-diyl, Pentadecan-1,15-diyl, Hexadecan-1,16-diyl, Heptadecan-1,17-diyl, Octadecan-1,18-diyl, Nonadecan-1,19-diyl oder Eicosan-1,20-diyl, bevorzugt Tetramethylen, Pentamethylen, Hexamethylen, Heptamethylen, Octamethylen, Nonan-1,9-diyl, Decan-1,10-diyl, insbesondere Hexamethyten.

Beispiele gut geeigneter Alkandiyl-Reste, die in der Kohlenstoffkette auch cyclische Gruppen enthalten, sind 2-Heptyl-1-pentyl-cyclohexan-3,4-bis(non-9-yl), Cyclohexan-1,2-, 1,4- oder -1,3-bis(eth-2-yl), Cyclohexan-1,3-bis(prop-3-yl) oder Cyclohexan-1,2-, 1,4- oder 1,3-bis(but-4-yl).

Weitere Beispiele geeigneter zweibindiger organischer Reste, die heteroatome enthalten, sind zweiwertige Polyesterreste mit wiederkehrenden Polyesteranteilen der Formel -(-CO-(CHR⁵)ₘ- CH₂-O-)-aus. Hierbei ist der Index m bevorzugt 4 bis 6 und der Substitutent R⁵ = Wasserstoff, ein Alkyl-, Cycloalkyl- oder Alkoxy-Rest. Kein Substituent enthält mehr als 12 Kohlenstoffatome.

Weitere Beispiele geeigneter zweibindiger organischer Reste, die Heteroatome enthalten, sind zweiwertige lineare Polyetherreste, vorzugsweise mit einem zahlenmittleren Molekulargewicht von 400 bis 5.000, insbesondere von 400 bis 3.000. Gut geeignete Polyetherreste haben die allgemeine Formel -(-O-(CHR⁶)ₒ-)ₚ-O-, wobei der Substituent R⁶ = Wasserstoff oder ein niedriger, gegebenenfalls substituierter Alkylrest ist, der Index o = 2 bis 6, bevorzugt 3 bis 4, und der Index p = 2 bis 100, bevorzugt 5 bis 50, ist. Als besonders gut geeignete Beispiele Werden lineare oder verzweigte Polyetherreste, die sich von Poly(oxyethylen)glykolen, Poly(oxypropylen)glykolen und Poly(oxybutylen)glykolen ableiten, genannt.

Des weiteren kommen auch lineare zweibindige Siloxanreste, wie sie beispielsweise in Siliconkautschuken vorliegen, hydrierte Polybutadien-oder Polyisoprenreste, statistische oder alternierende Butadien-Isopren-Copolymerisatreste oder Butadien-Isopren-Pfropfmischpolymerisatreste, die noch Styrol einpolymerisiert enthalten können, sowie Ethylen-Propylen-Dienreste in Betracht.

Als Substitutienten kommen alle organischen funktionellen Gruppen in Betracht, welche im wesentlichen inert sind, d. h., dass sie keine Reaktionen mit den Bestandteilen der erfindungsgemäßen Beschichtungsstoffe eingehen.

Beispiele geeigneter inerter organischer Reste sind Alkylgruppen, insbesondere Methylgruppen, Halogenatome, Nitrogruppen, Nitrilgruppen oder Alkoxygruppen.

Von den vorstehend beschriebenen zweibindigen organischen Resten sind die Alkandiyl-Reste, die keine Substituenten und keine cyclischen Gruppen in der Kohlenstoffkette enthalten, von Vorteil und werden deshalb bevorzugt verwendet.

Beispiele geeigneter blockierter Polyisocyanate (C) sind die Oligomeren von Diisocyanaten, wie Trimethylendiisocyanat, Tetramethylendiisocyanat, Pentamethylendiisocyanat, Hexamethylendiisocyanat, Heptamethylendiisocyanat, Ethylethylendiisocyanat, Trimethylhexandiisocyanat oder acyclische aliphatische Diisocyanate, die eine cyclische Gruppen in ihrer Kohlenstoffkette enthalten, wie Diisocyanate, abgeleitet von Dimerfettsäuren, wie sie unter der Handelsbezeichnung DDI 1410 von der Firma Henkel vertrieben und in den Patentschriften WO 97/49745 und WO 97/49747 beschrieben werden, insbesondere 2-Heptyl-3,4-bis,(9-isocyanatononyl)-1-pentyl-cyclohexan, oder 1,2-, 1,4- oder 1,3-Bis(2-isocyanatoeth-1-yl)cyclohexan, 1,3-Bis(3-isocyanatoprop-1-yl)cyclohexan oder 1,2-, 1,4- oder 1,3-Bis(4-isocyanatobut-1-yl)cyclohexan. Letztere sind im Rahmen der vorliegenden Erfindung aufgrund ihrer beiden aussschüeßlich an Alkylgruppen gebundenen Isocyanatgruppen trotz ihrer cyclischen Gruppen zu den acyclischen aliphatischen Diisocyanaten zu zählen. Von diesen Diisocyanaten wird Hexamethylendiisocyanat besonders bevorzugt eingesetzt.

Bevorzugt werden Oligomere (C) verwendet, die Isocyanurat-, Harnstoff , Urethan-, Biuret-, Uretdion-, Iminooxadiazindion, Carbodiimid- und/oder Allophanatgruppen enthalten. Beispiele geeigneter Herstellungsverfahren sind aus den Schriften CA 2,163,591 A, US 4,419,513 A, US 4,454,317 A, EP 0 646 608 A, US 4,801,675 A, EP 0 183 976 A1, DE 40 15 155 A1, EP 0 303 150 A1, EP 0 496 208 A1, EP 0 524 500 A1, EP 0 566 037 A1, US 5,258,482 A1, US 5,290,902 A1, EP 0 649 806 A1, DE 42 29 183 A1, EP 0 531 820 A1oder DE 100 05 228 A1 bekannt.

Außerdem kommt noch blockiertes Nonyltriisocyanat (NTI) (C) in Betracht.

Der erfindungsgemäße Beschichtungsstoff enthält als vierten wesentlichen Bestandteil, jeweils bezogen auf (A), (B), (C) und (D), 10 bis 40 Gew.-%, insbesondere 10 bis 35 Gew.-%, mindestens eines, insbesondere eines, blockierten Polyisocyanats (D), worin die blockierten Polyisocyanatgruppen an mindestens eine hart machende, vorzugsweise mindestens zwei und insbesondere mindestens drei hart machende Struktureinheit(en) gebunden sind. Hart machende Struktureinheiten erhöhen als Bestandteil eines dreidimensionalen Netzwerks dessen Glasübergangstemperatur.

Die hartmachenden Struktureinheiten sind zwei- oder mehrbindige organische Reste. Vorzugsweise werden zweibindige organische Reste verwendet.

Beispiele gut geeigneter hartmachender Struktureinheiten sind
- zweibindige aromatische, cycloaliphatische und aromatischcycloaliphatische Reste, bei denen innerhalb der blockierten Polyisocyanate (D) mindestens eine verknüpfende Bindung direkt zur cycloaliphatischen und/oder aromatischen Struktureinheit führt,
- sowie zweibindige alphatische Reste, bei denen innerhalb der blockierten Polyisocyanate (D) die beiden verknüpfenden Bindungen zu Methylengruppen führen, die mit einer aromatischen oder cycloaliphatischen, insbesondere cycloaliphatischen, Struktureinheit verbunden sind.

Die zweibindigen cycloaliphatischen, aromatischen und aliphatischen, insbesondere die cycloaliphatischen, Reste sind vorteilhaft und werden bevorzugt verwendet.

Beispiele geeigneter zweibindiger aromatischer Reste sind substituierte, insbesondere methylsubstituierte, oder unsubstituierte aromatische. Reste mit 6 bis 30 Kohlenstoffatomen im Molekül, wie Phen-1,4-, -1,3- oder -1,2-ylen, Naphth-1,4-, -1,3-, -1,2-, -1,5- oder -2,5-ylen, Propan-2,2-di(phen-4'-yl), Methan-di(phen-4'-yl), Diphenyl-4,4'-diyl oder 2,4- oder 2,6-Toluylen .

Beispiele geeigneter zweibindiger cycloaliphatischer Reste sind substituierte oder unsubstituierte, vorzugsweise unsubstituierte, Cycloalkandiyl-Reste mit 4 bis 20 Kohlenstoffatomen, wie Cyclobutan-1,3-diyl, Cyclopentan-1,3-diyl, Cyclohexan-1,3- oder -1,4-diyl, Cycloheptan-1,4-diyl, Norbornan-1,4-diyl, Adamantan-1,5-diyl, Decalin-diyl, 3,3,5-Trimethyl-cyclohexan-1,5-diyl, 1-Methylcyclohexan-2,6-diyl, Dicyclohexylmethan-4,4'-diyl, 1,1'-Dicyclohexan-4,4'-diyl oder 1,4-Dicyclohexylhexan-4,4"-diyl, insbesondere 3,3,5-Trimethyl-cyclohexan-1,5-diyl oder Dicyclohexylmethan-4,4'-diyl. Daneben können in untergeordneten Mengen die entsprechenden Triyl-Reste angewandt werden.

Beispiele geeigneter aliphatischer Reste sind Cyclohexan-1,2-, -1,4- oder - 1,3-bis(methyl).

Beispiele geeigneter Substituenten sind die vorstehend beschriebenen.

Beispiele geeigneter blockierter Polyisocyanate (D) sind die Oligomeren von Diisocyanaten, wie Isophorondiisocyanat (= 5-Isocyanato-1-isocyanatomethyl-1,3,3-trimethyl-cyclohexan), 5-Isocyanato-1-(2-isocyanatoeth-1-yl)-1,3,3-trimethyl-cyclohexan, 5-Isocyanato-1-(3-isocyanatoprop-1-yl)-1,3,3-trimethyl-cyclohexan, 5-Isocyanato-(4-isocyanatobut-1-yl)-1,3,3-trimethyl-cyclohexan, 1-Isocyanato-2-(3-isocyanatoprop-1-yl)-cyclohexan, 1-Isocyanato-2-(3-isocyanatoeth-1-yl)cyclohexan, 1-Isocyanato-2-(4-isocyanatobut-1-yl)-cyclohexan, 1,2-Diisocyanatocyclobutan, 1,3-Diisocyanatocyclobutan, 1,2-Diisocyanatocyclopentan, 1,3-Diisocyanatocyclopentan, 1,2-Diisocyanatocyclohexan, 1,3-Diisocyanatocyclohexan, 1,4-Diisocyanatocyclohexan, 1,2-, 1,4- oder 1,3-Bis(isocyanatomethyl)cyclohexan, Dicyclohexylmethan-2,4'-diisocyanat oder Dicydohexylmethan-4,4'-diisocyanat, insbesondere Isophorondiisocyanat.

Bevorzugt werden Oligomere (D) verwendet, die Isocyanurat-, Harnstoff-, Urethan-, Biuret-, Uretdion-, Iminooxadiazindion, Carbodiimid- und/oder Allophanatgruppen enthalten. Beispiele geeigneter Herstellungsverfahren sind aus den Patentschriften CA 2,163,591 A, US 4,419,513 A, US 4,454,317 A, EP 0 646 608 A, US 4,801,675 A, EP 0 183 976 A1, DE 40 15 155 A1, EP 0 303 150 A1, EP 0 496 208 A1, EP 0 524 500 A1, EP 0 566 037 A1, US 5,258,482 A1, US 5,290,902 A1, EP 0 649 806 A1, DE 42 29 183 A1 oder EP 0 531 820 A1 bekannt oder sie werden in der nicht vorveröffentlichten deutschen Patentanmeldung DE 100 05 228.2 beschrieben.

Geeignete Blockierungsmittel für die Herstellung der blockierten Polyisocyanate sind die aus der US-Patentschrift US 4,444,954 A bekannten:
i) Phenole wie Phenol, Cresol, Xylenol, Nitrophenol, Chlorophenol, Ethylphenol, t-Butylphenol, Hydroxybenzoesäure, Ester dieser Säure oder 2,5- di-tert.-Butyl-4-hydroxytoluol;
ii) Lactame, wie ε-Caprolactam, δ-Valerolactam, γ-Butyrolactam oder β-Propiolactam;
iii) aktive methylenische Verbindungen, wie Diethylmalonat, Dimethylmalonat, Acetessigsäureethyl- oder -methylester oder Acetylaceton;
iv) Alkohole wie Methanol, Ethanol, n-Propanol, Isopropanol, n-Butanol, Isobutanol, t-Butanol, n-Amylalkohol, t-Amylalkohol, Laurylalkohol, Ethylenglykolmonomethylether, Ethylenglykolmonoethylether, Ethylenglykolmonopropylether, Ethylenglykolmonobutylether, Diethylenglykolmonomethylether, Diethylenglykolmonoethylether, Propylenglykolmonomethylether, Methoxymethanol, Glykolsäure, Glykolsäureester, Milchsäure, Milchsäureester, Methylolharnstoff, Methylolmelamin, Diacetonalkohol, Ethylenchlorohydrin, Ethylenbromhydrin, 1,3-Dichloro-2-propanol, 1,4-Cyclohexyldimethanol oder Acetocyanhydrin;
v) Mercaptane wie Butylmercaptan, Hexylmercaptan, t-Butylmercaptan, t-Dodecylmercaptan, 2-Mercaptobenzothiazol, Thiophenol, Methylthiophenol oder Ethylthiophenol;
vi) Säureamide wie Acetoanilid, Acetoanisidinamid, Acrylamid, Methacrylamid, Essigsäureamid, Stearinsäureamid oder Benzamid;
vii) Imide wie Succinimid, Phthalimid oder Maleimid;
viii) Amine wie Diphenylamin, Phenylnaphthylamin, Xylidin, N-Phenylxylidin, Carbazol, Anilin, Naphthylamin, Butylamin, Dibutylamin oder Butylphenylamin;
ix) Imidazole wie Imidazol oder 2-Ethylimidazol;
x) Harnstoffe wie Harnstoff, Thioharnstoff, Ethylenharnstoff, Ethylenthioharnstoff oder 1,3-Diphenylharnstoff;
xi) Carbamate wie N-Phenylcarbamidsäurephenylester oder 2-Oxazolidon;
xii) Imine wie Ethylenimin;
xiii) Oxime wie Acetonoxim, Formaldoxim, Acetaldoxim, Acetoxim, Methylethylketoxim (Butanonoxim), Diisobutylketoxim, Diacetylmonoxim, Benzophenonoxim oder Chlorohexanonoxime;
xiv) Salze der schwefeligen Säure wie Natriumbisulfit oder Kaliumbisulfit;
xv) Hydroxamsäureester wie Benzylmethacrylohydroxamat (BMH) oder Allylmethacrylohydroxamat; oder
xvi) substituierte Pyrazole, insbesondere 3,5-Dimethylpyrazol, oder Triazole; sowie
xvii) Gemische dieser Blockierungsmittel.

Vorzugsweise sind die blockierten Polyisocyanate (C) mit substitiuierten Pyrazolen, insbesondere 3,5-Dimethylpyrazol, und die blockierten Polyisocyanate (D) mit Oximen, insbesondere Butanonoxim, blockiert.

Vorzugsweise besteht der erfindungsgemäße Beschichtungsstoff aus den vorstehend beschriebenen, wesentlichen Bestandteilen (A), (B), (C) und (D) sowie mindestens einem Zusatzstoff (E). Der Gehalt an Zusatzstoffen (E) kann sehr breit variieren und richtet sich insbesondere nach der Funktion von (E).

Beispiele geeigneter Zusatzstoffe (E) sind Bindemittel, die von den vorstehend beschriebenen Bindemitteln (A) und (B) verschieden sind; von den vorstehend beschriebenen Vernetzungsmitteln (C) und (D) verschiedene Vernetzungsmittel; nicht deckende Pigmente; molekulardispers lösliche Farbstoffe; Lichtschutzmittel, wie UV-Absorber rund reversible Radikalfänger (HALS); Antioxidantien; niedrig- und hochsiedende ("lange") organische Lösemittel; Entlüftungsmittel; Netzmittel; Emulgatoren; Slipadditive; Polymerisationsinhibitoren; Katalysatoren für die thermische Vernetzung; thermolabile radikalische Initiatoren; thermisch härtbare Reaktivverdünner; Haftvermittler; Verlaufmittel; filmbildende Hilfsmittel; Rheologiehilfsmittel (Verdicker und strukturviskose Sag control agents, SCA); Flammschutzmittel; Korrosionsinhibitoren; Rieselhilfen; Wachse; Sikkative; Biozide und/oder Mattierungsmittel; wie sie beispielsweise in dem Lehrbuch »Lackadditive« von Johan Bieleman, Wiley-VCH, Weinheim, New York, 1998, in der deutschen Patentanmeldung DE 199 14 896 A1, Spalte 14, Seite 26, bis Spalte 15, Zeile 46, im Detail beschrieben werden. Ergänzend wird noch auf die DE 199 04 317 A1und DE 198 55 125 A1verwiesen.

Methodisch weist die Herstellung der erfindungsgemäßen Beschichtungsstoffe keine Besonderheiten auf, sondern erfolgt vorzugsweise mit Hilfe des erfindungsgemäßen Verfahrens durch das Vermischen der vorstehend beschriebenen Bestandteile (A), (B), (C) und (D) sowie gegebenenfalls (E) und Homogenisieren der resultierenden Mischungen mit Hilfe üblicher und bekannter Mischverfahren und Vorrichtungen wie Rührkessel, Rührwerksmühlen, Extruder, Kneter, Ultraturrax, In-line-Dissolver, statische Mischer, Zahnkranzdispergatoren, Druckentspannungsdüsen und/oder Microfluidizer.

Die resultierenden erfindungsgemäßen Beschichtungsstoffe sind konventionelle, organische Lösemittel enthaltende Beschichtungsstoffe, wässrige Beschichtungsstoffe, im wesentlichen oder völlig lösemittel- und wasserfreie flüssige Beschichtungsstoffe (100%-Systeme), im wesentlichen oder völlig lösemittel- und wasserfreie feste Beschichtungsstoffe (Pulverlacke) oder im wesentlichen oder völlig lösemittelfreie Pulverlacksuspensionen (Pulverslurries). Vorzugsweise sind sie konventionelle Beschichtungsstoffe.

Sie sind hervorragend zur Herstellung ein- und mehrschichtiger Klarlackierungen, sowie mehrschichtiger, farb- und/oder effektgebender Beschichtungen insbesondere nach dem Nass-in-nass-Verfahren geeignet bei dem ein Basislack, insbesondere ein Wasserbasislack, auf die Oberfläche eines Substrats appliziert wird, wonach man die resultierende Basislackschicht, ohne sie auszuhärten, trocknet und mit einer Klarlackschicht überschichtet. Anschließend werden die beiden Schichten gemeinsam gehärtet.

Überraschenderweise kann die Applikation der erfindungsgemäßen Beschichtungsstoffe auch mit Hilfe des Coil-Coatings-Verfahrens erfolgen.

Die applizierten erfindungsgemäßen Beschichtungsstoffe werden auf den Bändern thermisch gehärtet. Die Aufheizung kann durch Konvektionswärmeübertragung, Bestrahlen mit nahem oder fernem Infrarot und/oder bei Bändern auf der Basis von Eisen durch elektrische Induktion erfolgen. Die maximale Objekttemperatur (peak metal temperature, PMT) liegt vorzugsweise bei 250°C.

Die Aufheizzeit, d.h. die Zeitdauer der thermischen Härtung variiert in Abhängigkeit von dem eingesetzten erfindungsgemäßen Beschichtungsstoff. Vorzugsweise liegt sie bei 35 s bis 2 min.

Wird im wesentlichen die Konvektionswärmeübertragung angewandt, werden bei den bevorzugten Bandlaufgeschwindigkeiten Umluftöfen einer Länge von 30 bis 50, insbesondere 35 bis 45 m, benötigt.

Die resultierenden erfindungsgemäßen beschichteten Bänder können zu Coils gewickelt und bis zur weiteren Verwendung problemlos gelagert werden.

Sie sind hervorragend für die Herstellung von Formteilen durch formgebe Bearbeitung, insbesondere durch Tiefziehen, geeignet.

Die resultierenden erfindungsgemäßen Formteile weisen Automobilqualität auf und sind deshalb hervorragend als Anbauteile für die Herstellung von Automobilkarosserien geeignet. Wegen ihrer besonders vorteilhaften Eigenschaften kommen sie auch als Nutzfahrzeugaufbauten und Verkleidungen von Caravans, im Hausgerätebereich beispielsweise für die Herstellung von Waschmaschinen, Geschirrspülmaschinen, Trocknern, Kühlschränken, Gefrierschränken oder Herden, im Leuchtenbereich für die Herstellung von Leuchten für den Innen- und Außenbereich oder im Baubereich im Innen- und Außenbereich, beispielsweise für die Herstellung von Decken- und Wandelementen, Türen, Toren Rohrisolierungen, Rollläden oder Fensterprofilen, in **Betracht.**

### Beispiele

### Herstellbeispiel 1

### Die Herstellung eines Methacrylatcopolymerisats (A)

In einem 5-Liter-Juvo-Kessel mit Heizmantel, ausgerüstet mit Thermometer, Rührer und Rückflusskühler, wurden 913,5 g Solvesso ® 150 vorgelegt. Unter Rührer und Überschleiern mit 200 cm³/min Stickstoff wurde die Vorlage auf 140 °C erhitzt. Anschließend wurde aus einem Tropftrichter eine Mischung aus 76,9 g tert.-Butyperoxydhexylhexanoat und 48,1 g Solvesso ® 150 während 4,75 Stunden gleichmäßig zudosiert (Zulauf 1). 0,25 Stunden nach Beginn des Zulaufs 1 wurde aus einem weiteren Tropftrichter eine Mischung aus 250 g Cyclohexylmethacrylat, 153,9 g n-Butylacrylat, 192,3 g Styrol, 173,1 g Hydroxethylmethacrylat und 192,3 g Hydroxypropylmethacrylat während 4 Stunden gleichmäßig zudosiert (Zulauf 2). Nach der Beendigung des Zulaufs 2 wurde Temperatur noch während 2 Stunden bei 140 °C gehalten. Anschließend wurde die Reaktionsmischung auf 80 °C abgekühlt und über einen 5 µm-GAF-Beutelfilter filtriert. Die resultierende Lösung des Methacrylatcopolymerisats (A) wies einen Festkörpergehalt von 50 Gew.-% (1 Stunde/130 °C) und eine Viskosität von 8,7 dPas, gemessen nach DIN 53018 auf. Das zahlenmittlere Molekulargewicht des Methacrylatcopolymerisats (A) lag bei 2.900 Dalton, die Glasübergangstemperatur bei 44 °C, die Hydroxylzahl bei 164 mg KOH/g und die Säurezahl bei 0 mg KOH/g.

### Herstellbeispiel 2

### Die Herstellung eines Polyesters (B)

In einem 5-Liter-Juvo-Kessel mit Heizmantel, ausgerüstet mit Thermometer, Rührer und Rückflusskühler, wurden 218,5 g Terephthalsäure, 187,7 g Trimethylolpropan, 131,1 g Neopentylglykol, 268,9 g Dimethylolcyclohexan, 190,5 g Hydroxypivalinsäureneopentylglykolester und 3 Gew.-%, bezogen auf die Gesamtmenge der Reaktionsmischung, Xylol als Schleppmittel vorgelegt. Unter Rührer und Überschleiern mit 200 cm³/min Stickstoff wurde die Vorlage auf 180 °C und dann langsam weiter auf 200 °C erhitzt. Nachdem der größte Teil der Terephthalsäure abreagiert hatte und eine Säurezahl von 10 mg KOH/g erreicht worden war, wurde 503,3 g Hexahydrophtalsäureanhydrid zugegeben. Die Temperatur der Reaktionsmischung wurde so lange bei 200 °C gehalten, bis eine Säurezahl von 18 mg KOH/g erreicht war. Danach wurde die Reaktionsmischung auf 150 °C abgekühlt und mit 500 g Solvesso® 150 auf einen Festkörpergehalt von 75 Gew.-% eingestellt. Danach wurde sie auf 80 °C abgekühlt und über einen 5 µm-GAF-Beutelfilter filtriert. Der resultierende Polyester (B) wies einen Gehalt an cycloaliphatischen Struktureinheiten von 51,5 Gew.-% auf. Seine Säurezahl lag bei 18,1 mg KOH/g, seine Hydroxylzahl bei 136 mg KOH/g und sein zahlenmittleres Molekulargewicht bei 2.500 Dalton. Der Polyester (B) wies eine Viskosität von 7 dPas, gemessen nach DIN 53018 60%-ig in Solvesso ® 150.

### Herstellbeispiel 3

### Die Herstellung eines Basislacks

In einem geeigneten Mischaggregat aus Kunststoff wurden 34,4 Gewichtsteile eines handelsüblichen Polyesters (Uralac ® ZW 5217 SN der Firma DSM Deutschland GmbH, 68,4-prozentig in Dibasicester ® der Firma DuPont) vorgelegt. Unter Rührer wurden 58 Gewichtsteile einer Celluloseacetobutyratlösung (15-prozentig in 81,5 Gew.-% Butylacetat und 3,5 Gew.-% Isotridecylalkohol) und 6,6 Gewichtsteile eines handelsüblichen, blockierten aliphatischen Polyisocyanats (Desmodur ® BL 3370 der Firma Bayer AG, 70-prozentig Methoxypropylacetat) zugegeben. Zur resultierenden Mischung wurden 0,4 Gewichtsteile eines handelsüblichen Verlaufmittels (Fisantrol ® AC 2575 SM der Firma DuPont Performance Coatings GmbH, 100-prozentig), 0,6 Gewichtsteile eines Entlüftungsmittels auf der Basis eines Copolymerisats aus Butylacrylat und Vinylisobutylether (Acronal ® 700 L, 50-prozentig in Ethylacetat) und 1,2 Gewichtsteile eines zweiten Entlüftungsmittels auf der Basis eines silikonfreien Polymers (Byk ® 075 der Firma Byk Chemie, 44-prozentig in Alkylbenzolen und Methoxypropylacetat 8/1), 0,6 Gewichtsteile Dibutylzinndilaurat und 52 Gewichtsteile Dibasicester ®. Anschließend wurden 4,3 Gewichtsteile Aluminiumeffektpigment (Alpate ® 8160N-AR der Firma Toyal, 65-prozentig in Testbenzin und Solvesso ® 100 1/1) und 4,2 Gewichtsteile Aluminiumeffektpigment (Alpate ® 7620 NS der Firma Toyal, 69-prozentig in Testbenzin und Solvesso ® 100 2,1/1) in 9 Gewichtsteilen Diacetonalkohol und 9 Gewichtsteilen Uralac ® ZW 5217 SN angeteigt. Nach 20 Minuten wurde die Aluminiumeffektpigmentpräparation der vorstehend beschriebenen Mischung zugesetzt, wonach der resultierende Basislack homogenisiert wurde und mit 6 Gewichtsteilen Dibutylether auf eine Verarbeitungsviskosität von 100 bis 110 Sekunden im DIN-4-Auslaufbecher bei 20 °C eingestellt wurde.

### Beispiel 1

### Die Herstellung eines Klarlacks

In einem geeigneten Mischaggregat aus Metall wurden 84,9 Gewichtsteile der Lösung des Methacrylatcopolymerisats (A) des Herstellbeispiels 1 mit 40,4 Gewichtsteilen der Lösung des Polyesters (B) des Herstellbeispiels 2 gemischt. Zu der Mischung wurden 65 Gewichtsteile eines handelsüblichen, mit 3,5-Dimethylpyrazol blockierten, aliphatischen Polyisocyanats.auf der Basis von Hexamethylendiisocyanat (Desmodur ® LS 2253 der Firma Bayer AG) und 84,4 Gewichtsteile eines handelsüblichen, mit Butanonoxim blockierten, cycloaliphatischen Polyisocyanats auf der Basis von Isophorondiisocyanat (Desmodur BL 4265 der Firma Bayer AG) hinzugegeben. Zu der resultierenden Mischung wurden 1,94 Gewichtsteile eines UV-Absorbers auf der Basis von Hydroxyphenyltriazin (Tinuvin ® 400 der Firma Ciba Specialty Chemicals), 1,94 Gewichtsteile eines sterisch gehinderten Amins (HALS, Tinuvin ® 292 der Firma Ciba Specialty Chemicals), 0,97 Gewichtsteile Dibutylzinndilaurat, 0,84 Gewichtsteile mit einem Polyester modifizierten Polydimethylsiloxan-Verlaufmittels (Byk ® 310 der Firma Byk Chemie) und 0,84 Gewichtsteile eines alkylmodifizierten Methylalkyl-Polysiloxan-Entlüftungsmittels (Byk ® 322 der Firma Byk Chemie) zugegeben. Der resultierende Klarlack wurde homogenisiert und mit 70 Gewichtsteilen Methoxypropylacetat auf eine Verarbeitungsviskosität von 100 Sekunden bei 20 °C im DIN-4-Auslaufbecher eingestellt.

### Beispiel 2

### Die Herstellung einer Mehrschichtlackierung

Für die Herstellung der Prüfbleche wurden die in der Coil-Coatings-Industrie üblichen, elektrolytisch verzinkten, phosphatierten Stahlbleche einer Dicke von 0,8 mm, die mit einem handelsüblichen, tiefziehfähigen Korrosionsschutzprimer der Firma BASF Coatings AG mit einer Schichtdicke von 10 µm beschichtet waren, verwendet. Auf diese Primerschicht wurde der Basislack des Herstellbeispiels 3 so appliziert, dass nach der Härtung eine Trockenschichtdicke von 17 µm resultierte. Die Härtung der Basislackschicht erfolgte bei einer PMT (peak metal temperature) von 241 °C. Anschließend wurde auf die resultierende Basislackierung der Klarlack des Beispiels 1 zweischichtig appliziert, sodass nach der Härtung bei einer PMT von 241 °C eine Trockenschichtdicke von 2 x 19 µm resultierte.

Die resultierenden Mehrschichtlackierungen wies einen hervorragenden Verlauf auf. Sie war hochglänzend. Im T-Bend-Test nach dem ECCA-Prüfverfahren, genau beschrieben unter ECCA-T7 (Referenznormen: EN 2370: 1991/EN ISO 1519,1995/EN ISO 6860 im 1995/ASTM D 522-93a) erreichten die Prüftafeln einen T-Wert von 0,5 bis 1,5. Die Chemikalienbeständigkeit wurde mit Hilfe eines üblichen und bekannten Gradientenofen-Tests ermittelt. Dazu wurden Schwefelsäure, Pankreatin, Baumharz und Wasser auf die Oberfläche der Mehrschichtlackierung appliziert. Die Prüftafeln wurden auf einen vorgeheizten Gradientenofen gelegt. Nach dem Erhitzen wurden die Prüftafeln mit Wasser abgespült, und es wurde jeweils die Temperatur ermittelt, bis zu der noch keine sichtbaren Beschädigungen der Lackoberfläche zu erkennen waren:

| | |
|---|---|
| Schwefelsäure: | 51 °C, |
| Pankreatin: | 48 °C, |
| Baumharz: | 57 °C und |
| Wasser: | > 75 °C. |

Die Ergebnisse untermauerten, dass der Klarlack des Beispiels 1 sehr gut für das Coil-Coating-Verfahren geeignet war und Mehrschichtlackierungen in Automobilqualität lieferte.

Darüber hinaus waren die mit den Mehrschichtlackierungen beschichteten Formteile recyclingfähig und sehr gut überlackierbar.

## Patentansprüche

1. Thermisch härtender, transparenter Beschichtungsstoff, enthaltend, jeweils bezogen auf (A), (B), (C) und (D),
(A) 10 bis 40 Gew.-% mindestens eines (Meth)Acrylat(co)potymerisats mit einem zahlenmittleren Molekulargewicht von 1.000 bis 6.000 Dalton, einer Glasübergangstemperatur von -15 bis +70 °C und einer Hydroxylzahl von 80 bis 200 mg KOH/g,
(B) 10 bis 40 Gew.-% mindestens eines Polyesters mit einem zahlenmittleren Molekulargewicht von 800 bis 6.000 Dalton, einer Hydroxylzahl von 80 bis 200 mg KOH/g und einer Säurezahl von 1 bis 50 mg KOH/g, enthaltend, bezogen auf den Polyester, 30 bis 70 Gew.% cycloaliphatischer Struktureinheiten,
(C) 10 bis 40 Gew.% mindestens eines blockierten Polyisocyanats, worin die blockierten Polyisocyanatgruppen an mindestens eine flexibilisierende Struktureinheit gebunden sind, die als Bestandteil eines dreidimensionalen Netzwerks dessen Glasübergangstemperatur emiedrigt, und
(D) 10 bis 40 Gew.-% mindestens eines blockierten Polyisocyanats, worin mindestens eine der blockierten Polyisocyanatgruppen an mindestens eine hart machende Struktureinheit gebunden ist, die als Bestandteil eines dreidimensionalen Netzwerks dessen Glasübergangstemperatur erhöht.

2. Beschichtungsstoff nach Anspruch 1, **dadurch gekennzeichnet, dass** er, bezogen auf (A), (B), (C) und (D), 10 bis 35 Gew.-% (A) enthält.

3. Beschichtungsstoff nach Anspruch 1 oder 2, **dadurch gekennzeichnet, dass** er, bezogen auf (A), (B), (C) und (D), 10 bis 35 Gew.-% (B) enthält.

4. Beschichtungsstoff nach einem der Ansprüche 1 bis 3, **dadurch gekennzeichnet, dass** er, bezogen auf (A), (B), (C) und (D), 10 bis 35 New.-% (C) enthält.

5. Beschichtungsstoff nach einem der Ansprüche 1 bis 4, **dadurch gekennzeichnet, dass** er, bezogen auf (A), (B), (C) und (D), 10 bis 35 Gew.-% (D) enthält.

6. Beschichtungsstoff nach einem der Ansprüche 1 bis 5, **dadurch gekennzeichnet, dass** (A) ein zahlenmittleres Molekulargewicht von 1.000 bis 5.000 Dalton aufweist.

7. Beschichtungsstoff nach einem der Ansprüche 1 bis 6, **dadurch gekennzeichnet, dass** (A) eine Glasübergangstemperatur -15 bis +60 °C hat.

8. Beschichtungsstoff nach einem der Ansprüche 1 bis 7, **dadurch gekennzeichnet, dass** (A) eine Hydroxylzahl von 100 bis 180 mg KOH/g hat.

9. Beschichtungsstoff nach einem der Ansprüche 1 bis 8, **dadurch gekennzeichnet, dass** (B) ein zahlenmittleres Molekulargewicht von 1.000 bis 5.500 Dalton hat.

10. Beschichtungsstoff nach einem der Ansprüche 1 bis 9, **dadurch gekennzeichnet, dass** (B) eine Hydroxylzahl von 100 bis 180 mg KOH/g hat.

11. Beschichtungsstoff nach einem der Ansprüche 1 bis 10, **dadurch gekennzeichnet, dass** (B) eine Säurezahl von 3 bis 25 mg KOH/g hat.

12. Beschichtungsstoff nach einem der Ansprüche 1 bis 11, **dadurch gekennzeichnet, dass** (B), bezogen auf (B), 40 bis 60 Gew.-% cycloaliphatischer Struktureinheiten enthält.

13. Beschichtungsstoff nach einem der Ansprüche 1 bis 12, **dadurch gekennzeichnet, dass** die flexibilisierenden Struktureinheiten von (C) flexibilisierenden Segmente aus der Gruppe, bestehend aus zweibindigen aliphatischen Kohlenwasserstoffresten und zweibindigen, Heteroatome enthaltenden, aliphatischen Kohlenwasserstoffresten ausgewählt werden.

14. Beschichtungsstoff nach Anspruch 13, **dadurch gekennzeichnet, dass** die flexibilisierenden Struktureinheiten Hexamethylenreste sind.

15. Beschichtungsstoff nach einem der Ansprüche 1 bis 15, **dadurch gekennzeichnet, dass** die hartmachenden Struktureinheiten von (D) aus der Gruppe, bestehend aus zwei- und mehrbindigen cycloaliphatischen Resten, ausgewählt werden.

16. Beschichtungsstoff nach Anspruch 15, **dadurch gekennzeichnet, dass** die cycloaliphatischen Reste Isophoronreste sind.

17. Beschichtungsstoff nach einem der Ansprüche 1 bis 16, **dadurch gekennzeichnet, dass** die Blockierungsmittel für die Polyisocyanate (C) und (D) aus der Gruppe, bestehend aus Phenolen, Lactamen, aktiven methylenischen Verbindungen, Alkoholen, Mercaptanen, Säureamiden, Imiden, Aminen, Imidazolen, Harnstoffen, Carbamaten, Iminen, Oximen, Salzen der schwefeligen Säure, Hydroxamsäureestem sowie substituierten Pyrazolen und Triazolen, ausgewählt werden.

18. Beschichtungsstoff nach Anspruch 17, **dadurch gekennzeichnet, dass** die Polyisocyanate (C) mit substituierten Pyrazolen blockiert sind.

19. Beschichtungsstoff nach Anspruch 17 oder 18, **dadurch gekennzeichnet, dass** die Polyisocyanate (D) mit Oximen blockiert sind.

20. Beschichtungsstoff nach einem der Ansprüche 1 bis 19, **dadurch gekennzeichnet, dass** er aus (A), (B), (C) und (D) sowie mindestens einem Zusatzstoff (E).besteht.

21. Verfahren zur Herstellung des thermisch härtbaren, transparenten Beschichtungsstoffs gemäß einem der Ansprüche 1 bis 20 durch Vermischen der Bestandteile (A), (B), (C) und (D) sowie gegebenenfalls (E) und Homogenisieren der resultierenden Mischung.

22. Verwendung des thermisch härtbaren, transparenten Beschichtungsstoffs gemäß einem der Ansprüche 1 bis 20 und des mit Hilfe des Verfahrens gemäß Anspruch 21 hergestellten thermisch härtbaren, transparenten Beschichtungsstoffs für die Herstellung von transparenten Beschichtungen nach dem Coil-Coating-Verfahren.

## Claims

1. Thermosetting transparent coating material comprising, based in each case on (A), (B), (C), and (D),
(A) from 10 to 40 % by weight of at least one (meth)acrylate (co)polymer having a number-average molecular weight of from 1,000 to 6,000 daltons, a glass transition temperature of -15 to +70°C, and a hydroxyl number of from 80 to 200 mg KOH/g,
(B) from 10 to 40 % by weight of at least one polyester having a number-average molecular weight of from 800 to 6,000 daltons, a hydroxyl number of from 80 to 200 mg KOH/g and an acid number of from 1 to 50 mg KOH/g, comprising, based on the polyester, from 30 to 70 % by weight of cycloaliphatic structural units,
(C) from 10 to 40 % by weight of at least one blocked polyisocyanate in which the blocked polyisocyanate groups are attached to at least one flexibilizing structural unit which, as part of a three-dimensional network, lowers its glass transition temperature, and
(D) from 10 to 40 % by weight of at least one blocked polyisocyanate in which at least one of the blocked polyisocyanate groups is attached to at least one hardening structural unit which, as part of a three-dimensional network, raises its glass transition temperature.

2. Coating material according to Claim 1, **characterized in that** it contains, based on (A), (B), (C), and (D), from 10 to 35 % by weight of (A).

3. Coating material according to Claim 1 or 2, **characterized in that** it contains, based on (A), (B), (C), and (D), from 10 to 35 % by weight of (B).

4. Coating material according to any of Claims 1 to 3, **characterized in that** it contains, based on (A), (B), (C), and (D), from 10 to 35 % by weight of (C).

5. Coating material according to any of Claims 1 to 4, **characterized in that** it contains, based on (A), (B), (C), and (D), from 10 to 35 % by weight of (D).

6. Coating material according to any of Claims 1 to 5, **characterized in that** (A) has a number-average molecular weight of from 1,000 to 5,000 daltons.

7. Coating material according to any of Claims 1 to 6, **characterized in that** (A) has a glass transition temperature from -15 to + 60°C.

8. Coating material according to any of Claims 1 to 7, **characterized in that** (A) has a hydroxyl number of from 100 to 180 mg KOH/g.

9. Coating material according to any of Claims 1 to 8, **characterized in that** (B) has a number-average molecular weight of from 1,000 to 5,500 daltons.

10. Coating material according to any of Claims 1 to 9, **characterized in that** (B) has a hydroxyl number of from 100 to 180 mg KOH/g.

11. Coating material according to any of Claims 1 to 10, **characterized in that** (B) has an acid number of from 3 to 25 mg KOH/g.

12. Coating material according to any of Claims 1 to 11, **characterized in that** (B) contains, based on (B), from 40 to 60% by weight of cycloaliphatic structural units.

13. Coating material according to any of Claims 1 to 12, **characterized in that** the flexibilizing structural units of (C) are selected from the group consisting of divalent aliphatic hydrocarbon radicals and divalent, heteroatom-containing aliphatic hydrocarbon radicals.

14. Coating material according to Claim 13, **characterized in that** the flexibilizing structural units are hexamethylene radicals.

15. Coating material according to any of Claims 1 to 15, **characterized in that** the hardening structural units of (D) are selected from the group consisting of divalent and higher polyvalent cycloaliphatic radicals.

16. Coating material according to Claim 15, **characterized in that** cycloaliphatic radicals are isophorone radicals.

17. Coating material according to any of Claims 1 to 16, **characterized in that** the blocking agents for the polyisocyanates (C) and (D) are selected from the group consisting of phenols, lactams, active methylenic compounds, alcohols, mercaptans, acid amides, imides, amines, imidazoles, ureas, carbamates, imines, oximes, salts of sulfurous acid, hydroxamic esters, and substituted pyrazoles and triazoles.

18. Coating material according to Claim 17, **characterized in that** the polyisocyanates (C) are blocked with substituted pyrazoles.

19. Coating material according to Claim 17 or 18, **characterized in that** the polyisocyanates (D) are blocked with oximes.

20. Coating material according to any of Claims 1 to 19, **characterized in that** it is composed of (A), (B), (C), and (D) and also of at least one additive (E).

21. Process for preparing the thermally curable transparent coating material according to any of Claims 1 to 20 by mixing constituents (A), (B), (C), and (D) and, where used, (E) and homogenizing the resulting mixture.

22. Use of the thermally curable transparent coating material according to any of Claims 1 to 20 and of the thermally curable transparent coating material prepared by the process according to Claim 21 for producing transparent coatings by the coil coating process.

## Revendications

1. Substance de revêtement thermodurcissable, transparente, contenant, à chaque fois par rapport à (A), (B), (C) et (D),
(A) 10 à 40% en poids d'au moins un (co)polymère de (méth)acrylate présentant un poids moléculaire numérique moyen de 1000 à 6000 Daltons, une température de transition vitreuse de -15 à +70°C et un indice d'hydroxyle de 80 à 200 mg de KOH/g,
(B) 10 à 40% en poids d'au moins un polyester présentant un poids moléculaire numérique moyen de 800 à 6000 Daltons, un indice d'hydroxyle de 80 à 200 mg de KOH/g et un indice d'acide de 1 à 50 mg de KOH/g, contenant, par rapport au polyester, 30 à 70% en poids d'unités de structure cycloaliphatiques,
(C) 10 à 40% en poids d'au moins un polyisocyanate bloqué, où les groupes polyisocyanate bloqués sont liés à au moins une unité de structure assouplissante, qui diminue, en tant que constituant d'un réseau tridimensionnel, sa température de transition vitreuse, et
(D) 10 à 40% en poids d'au moins un polyisocyanate bloqué, où au moins un des groupes polyisocyanate bloqués est lié à au moins une unité de structure durcissante, qui augmente, en tant que constituant d'un réseau tridimensionnel, sa température de transition vitreuse.

2. Substance de revêtement selon la revendication 1, **caractérisée en ce qu'**elle contient, par rapport (A), (B), (C) et (D), 10 à 35% en poids de (A).

3. Substance de revêtement selon la revendication 1 ou 2, **caractérisée en ce qu'**elle contient, par rapport (A), (B), (C) et (D), 10 à 35% en poids de (B).

4. Substance de revêtement selon l'une quelconque des revendications 1 à 3, **caractérisée en ce qu'**elle contient, par rapport (A), (B), (C) et (D), 10 à 35% en poids de (C).

5. Substance de revêtement selon l'une quelconque des revendications 1 à 4, **caractérisée en ce qu'**elle contient, par rapport (A), (B), (C) et (D), 10 à 35% en poids de (D).

6. Substance de revêtement selon l'une quelconque des revendications 1 à 5, **caractérisée en ce que** (A) présente un poids moléculaire numérique moyen de 1000 à 5000 Daltons.

7. Substance de revêtement selon l'une quelconque des revendications 1 à 6, **caractérisée en ce que** (A) présente une température de transition vitreuse de -15 à +60°C.

8. Substance de revêtement selon l'une quelconque des revendications 1 à 7, **caractérisée en ce que** (A) présente un indice d'hydroxyle OH de 100 à 180 mg de KOH/g.

9. Substance de revêtement selon l'une quelconque des revendications 1 à 8, **caractérisée en ce que** (B) présente un poids moléculaire numérique moyen de 1000 à 5500 Daltons.

10. Substance de revêtement selon l'une quelconque des revendications 1 à 9, **caractérisée en ce que** (B) présente un indice d'hydroxyle OH de 100 à 180 mg de KOH/g.

11. Substance de revêtement selon l'une quelconque des revendications 1 à 10, **caractérisée en ce que** (B) présente un indice d'acide de 3 à 25 mg de KOH/g.

12. Substance de revêtement selon l'une quelconque des revendications 1 à 11, **caractérisée en ce que** (B), par rapport à (B), contient 40 à 60% en poids d'unités de structure cycloaliphatiques.

13. Substance de revêtement selon l'une quelconque des revendications 1 à 12, **caractérisée en ce que** les unités de structure assouplissantes de (C) sont choisies dans le groupe constitué par des radicaux hydrocarbonés aliphatiques divalents et des radicaux hydrocarbonés aliphatiques divalents, contenant des hétéroatomes.

14. Substance de revêtement selon la revendication 13, **caractérisée en ce que** les unités de structure assouplissantes sont des radicaux hexaméthylène.

15. Substance de revêtement selon l'une quelconque des revendications 1 à 15, **caractérisée en ce que** les unités de structure durcissantes de (D) sont choisies dans le groupe constitué par les radicaux cycloaliphatiques divalents et polyvalents.

16. Substance de revêtement selon la revendication 15, **caractérisée en ce que** les radicaux cycloaliphatiques sont des radicaux d'isophorone.

17. Substance de revêtement selon l'une quelconque des revendications 1 à 16, **caractérisée en ce que** les agents de blocage pour les polyisocyanates (C) et (D) sont choisis dans le groupe constitué par les phénols, les lactames, les composés à méthylène actif, les alcools, les mercaptans, les amides d'acide, les imides, les amines, les imidazoles, les urées, les carbamates, les imines, les oximes, les sels de l'acide sulfureux, les esters de l'acide hydroxamique ainsi que les pyrazoles et les triazoles substitués.

18. Substance de revêtement selon la revendication 17, **caractérisée en ce que** les polyisocyanates (C) sont bloqués avec des pyrazoles substitués.

19. Substance de revêtement selon la revendication 17 ou 18, **caractérisée en ce que** les polyisocyanates (D) sont bloqués avec des oximes.

20. Substance de revêtement selon l'une quelconque des revendications 1 à 19, **caractérisée en ce qu'**elle est constituée par (A), (B), (C) et (D) ainsi que par au moins un additif (E).

21. Procédé pour la préparation de la substance de revêtement thermodurcissable, transparente selon l'une quelconque des revendications 1 à 20 par mélange des constituants (A), (B), (C) et (D) ainsi que le cas échéant (E) et par homogénéisation du mélange obtenu.

22. Utilisation de la substance de revêtement thermodurcissable, transparente selon l'une quelconque des revendications 1 à 20 et de la substance de revêtement thermodurcissable, transparente préparée à l'aide du procédé selon la revendication 21 pour la réalisation de revêtements transparents selon le procédé de Coil-Coating.
